# EUROPÄISCHE PATENTSCHRIFT

(11) **EP 3 966 400 B1**
(45) Veröffentlichungstag und Bekanntmachung des Hinweises auf die Patenterteilung: **14.02.2024**
(21) Anmeldenummer: 20757877.4
(22) Anmeldetag: 14.08.2020
(51) Int. Cl.: E04D 5/12, E04D 7/00, B32B 5/00, B32B 27/12, B32B 27/30, B32B 27/32, B32B 27/40, B32B 5/02, B32B 7/12, E04D 12/00

(54) **BAUBAHN**
BUILDING MEMBRANE
MEMBRANE DE CONSTRUCTION

(30) Priorität: 28.08.2019 DE 102019006069; 11.10.2019 DE 102019007074
(43) Veröffentlichungstag der Anmeldung: 16.03.2022
(73) Patentinhaber: EWALD DÖRKEN AG, 58313 Herdecke (DE)
(72) Erfinder: BACHON, Thomas, 40597 Düsseldorf (DE); KAISER, Uwe, 58313 Herdecke (DE); KLINGELHAGE, Norbert, 58300 Wetter (DE); LIPPS, Jochen, 58089 Hagen (DE); MOKANIS, Ilias, 58313 Herdecke (DE); MÜLLER, Umut, 58095 Hagen (DE); SAND, Henning, 44287 Dortmund (DE)
(74) Vertreter: Weidener, Jörg Michael
(86) Internationale Anmeldenummer: PCT/EP2020/072844
(87) Internationale Veröffentlichungsnummer: WO 2021/037588

(56) Entgegenhaltungen:
- EP-A1- 0 006 189
- EP-A1- 2 055 857
- EP-A1- 3 513 961
- CN-A- 106 284 692
- DE-A1- 10 314 361
- DE-A1-102009 018 505
- DE-A1-102015 000 092
- DE-U1-202018 107 361
- US-A1- 2011 011 021
- US-A1- 2013 065 020
- US-A1- 2014 248 486
- US-A1- 2018 100 256
- US-B2- 10 273 693

## Beschreibung

Die vorliegende Erfindung betrifft eine Baubahn, insbesondere eine Unterdachbahn, insbesondere vorgesehen zur Verwendung als Unterdeckbahn, vorzugsweise Schalungsbahn, und/oder Dachabdichtungsbahn, und/oder Fassadenbahn.

Insbesondere kann die Baubahn in der Bauwirtschaft eingesetzt werden, vorzugsweise als Gebäudehülle.

Die primäre Aufgabe einer Baubahn, insbesondere einer Unterdachbahn, insbesondere einer Dachabdichtungsbahn und/oder einer Schalungsbahn, besteht darin, für ein Dach bzw. Gebäude die Regensicherheit unter der Hartbedachung herzustellen. Bahnen der vorgenannten Art werden im Baubereich eingesetzt und haben insbesondere die Aufgabe, das Innere des Gebäudes und/oder Dachkonstruktionen nicht nur vor Regen und Feuchtigkeit, sondern auch vor Flugschnee und/oder Staub zu schützen.

Die Unterdachbahnen werden dabei bevorzugt auf Steildächern, beispielsweise auf Walmdächern oder Kuppelwalmdächern, verwendet.

Eine Schalungsbahn liegt insbesondere auf einer Schalungsebene auf, wobei als Schalung (auch Verschalung genannt) eine flächige Konstruktion zu verstehen ist, die zur Verkleidung dient. Eine Dachschalung wird üblicherweise auf die Sparren aufgebracht.

Die Unterdeckbahn kann als Hüllfläche eines Gebäudes angesehen werden und dient der Außenabdichtung und/oder Winddichtung.

Unterdachbahnen werden in der Regel für einen längeren Benutzungszeitraum eingesetzt, der sich über mehrere Jahre oder gar Jahrzehnte erstrecken kann. Dabei werden für den Benutzungszeitraum hohe Anforderungen an die Unterdachbahn gestellt. Die hohen Anforderungen können im Hinblick auf die Alterungsbeständigkeit, die Widerstandsfähigkeit gegen UV-Strahlung, Feuchtigkeit und/oder Staub bestehen. Die Anforderungen an die Alterungsbeständigkeit ergeben sich daher, da die Unterdachbahn Umwelteinflüssen, wie z. B. Temperaturschwankungen, ausgesetzt ist. Diese Umwelteinflüsse wirken sich dabei insbesondere beschleunigend auf den natürlichen Alterungsprozess der Unterdachbahn aus und führen möglicherweise zu einem Verlust der mechanischen Eigenschaften, insbesondere der Reißkraft und der Reißdehnung.

Einer Freibewitterung sind die Unterdachbahnen bei einer feuchten Witterung ausgesetzt, die insbesondere den Alterungsprozess beschleunigen kann. Diese Phase der Freibewitterung tritt dann ein, wenn die Unterdachbahnen bereits verlegt sind, das Dach aber noch nicht vollständig oder nur teilweise eingedeckt ist. Vor allem in dieser Zeit ist die Unterdachbahn hohen Belastungen aufgrund einfallender UV-Intensität ausgesetzt. Gleichzeitig sollte die primäre Aufgabe der Unterdachbahn, nämlich die wasserabweisende und/oder wasserdichte Funktion, weiterhin gewährleitstet werden.

Nachfolgend gibt die Begrifflichkeit bzw. die Kennzeichnung "außenseitig" bzw. "von außen" in der Regel an, dass die der Witterung zugewandte Seite und insbesondere von der Dachkonstruktion abgewandte Seite gemeint ist. Demzufolge bezieht sich die Begrifflichkeit "innenseitig" bzw. "von innen" in der Regel auf das Innere des Gebäudes bzw. auf die die der Dachkonstruktion zugewandte und der Bewitterungsseite abgewandte Seite.

Dachkonstruktionen bzw. Dachsysteme sind komplexe Systeme, die insbesondere aus mehreren Baustoffen aufgebaut sind. Bei der reellen Gefahr eines Brandfalls sind diese Dachkonstruktionen hohen thermischen Beanspruchungen ausgesetzt.

Ein Brandangriff kann sowohl von innen - aus dem Inneren des Gebäudes - als auch von außen erfolgen. Insbesondere für den Brandangriff auf die Dachaußenseite - auf die Außenseite der Unterdachbahn - ist die Unterdachbahn hohen thermischen Belastungen ausgesetzt.

Im Stand der Technik halten die bekannten Baubahnen diesen hohen thermischen Belastungen in der Regel nur für einen sehr kurzen Zeitraum stand. Tritt eine Brandgefahr von außen ein - beispielsweise durch einen Brand bei einem Nachbargebäude und/oder durch auf den Dachbereich einfallende Feuerwerkskörper und/oder durch Dacharbeiten mit offener Flamme - so greift der Brand in der Regel nach einem sehr kurzen Zeitraum, beispielsweise zwischen drei bis zehn Minuten, auf das Innere des Gebäudes über. Dies stellt eine Gefahr für die in dem Gebäude anwesenden Personen dar. Auch ergibt sich im Brandfall eine existenzielle Bedrohung für die industriellen und gewerblichen Betriebe. Materielle Schäden lassen sich noch ausgleichen, aber ein Todesfall oder ein gesundheitlicher Schaden der im Gebäude befindlichen Personen nicht.

Der Brand breitet sich in der Regel auch aufgrund der Möglichkeit, schnell ins Innere des Gebäudes überzugreifen, sehr schnell großflächig aus, so dass auch Nachbargebäude zeitnah betroffen sind.

Dachsysteme stellen demgemäß im Brandfall einen Gefahrenbereich dar, insbesondere da auch die Dachkonstruktion im Brandfall einstürzen oder das Feuer weiter "schüren" kann. Auch die im Brandfall freigesetzten chemischen Verbindungen (gesundheitsschädigende Gase) können zu einer Rauchgasvergiftung des Löschpersonals und/oder der Anwohner führen.

Die EP 3 513 961 A1 betrifft eine Baufolie in oder an der Außenwand eines Gebäudes, wobei die Baufolie mindestens zwei Schichten mit einer stabilen, den Brandschutz erhöhenden Unterbahn aus Glasvlies oder Glasgewebe und einer darüber oder darunter befestigten Folie oder Membrane aus Polyamid, Polyurethan, Plyethylen oder einem Acrylat aufweist.

Die CN 106 284 692 A offenbart eine flammenhemmende wasserdichte Bahn.

Die US 2018/100256 A1 betrifft eine Flammensperre aus Vliesstoff, die für Anwendungen geeignet ist, die eine hochleistungsfähige, kostengünstige Flammensperre erfordern.

Die US 2014/248486 A1 betrifft eine nicht entflammbare Isolierfolie, die ein Glasfasergewebe mit einer nicht entflammbaren Beschichtungsschicht aufweist.

Die EP 0 006 189 A1 betrifft ein Verfahren zum Herstellen einer bituminierten Dachbahn.

Die DE 20 2018 107 361 U1 betrifft einen folienförmigen Baustoff zur Abdichtung von Flachdächern.

Die DE 103 14 361 A1 betrifft eine Dach- und Dichtungsbahn mit Brandschutzcharakter.

Die DE 10 2009 018 505 A1 betrifft ein Verfahren zur Herstellung von bahnförmigem Material, das als Dachabdichtungsbahn genutzt werden kann.

Die EP 2 055 857 A1 betrifft eine emmissionshemmende Verkleidung für eine Gebäudestruktur, z. B. eine Dachbahn, mit einer ersten und einer zweiten Schicht. Die erste Schicht dient als Basis für die zweite Schicht, wobei die zweite Schicht aus Granulat besteht, das NOₓ-reduzierendes Anatas-Titandioxid enthält.

Die US 2013/065020 A1 betrifft eine Dachabdichtung mit einer Membranschicht, wobei auf einer ersten Seite der Membranschicht eine Klebstoffschicht aufgeklebt ist und wobei auf der ersten Klebstoffschicht eine Schicht aus Granulat aufgeklebt ist.

Die DE 10 2015 000 092 A1 betrifft eine Unterdachbahn mit einer im verlegten Zustand nach außen gewandten Bewitterungsseite und einer im verlegten Zustand nach innen gewandten Innenseite sowie mit mindestens einer wasserdampfdurchlässigen Trägerschicht und mindestens einer mit der Trägerschicht verbundenen, wasserundurchlässigen, wasserdampfdurchlässigen Funktionsschicht.

Die US 10 273 693 B2 betrifft ein beschichtetes Gewebe, das ein Gewebesubstrat und eine Beschichtung auf dem Substrat umfasst, wobei die Beschichtung ein Bindemittel und in dem Bindemittel dispergiertes, expandierbares Graphit umfasst.

Die US 2011/011021 A1 betrifft eine feuerbeständige Zwischenlage in Rollenform.

Aufgabe der vorliegenden Erfindung ist es, die vorgenannten Nachteile des Standes der Technik zu vermeiden oder aber zumindest im Wesentlichen zu reduzieren. Insbesondere ist es die Aufgabe der vorliegenden Erfindung eine Baubahn bereit zu stellen, die den Brandschutz verbessert.

Die vorgenannte Aufgabe ist erfindungsgemäß durch eine Baubahn, insbesondere eine Unterdachbahn, insbesondere vorgesehen zur Verwendung als Unterdeckbahn, vorzugsweise Schalungsbahn, und/oder Dachabdichtungsbahn, und/oder Fassadenbahn, nach Anspruch 1 gelöst.

Erfindungsgemäß ist vorgesehen, dass die Baubahn wenigstens eine als Brandschutzschicht ausgebildete Trägerschicht und wenigstens eine weitere Schicht, wobei die weitere Schicht als weitere Brandschutzschicht ausgebildet ist,aufweist.

Durch die erfindungsgemäße Ausbildung der Baubahn wird der Brandschutz erhöht. Letztlich ist die Baubahn wenigstens zweiteilig bzw. -schichtig ausgebildet, wobei sowohl die Trägerschicht als auch die weitere, von der Trägerschicht separate Schicht jeweils als Brandschutzschicht ausgebildet ist. Vorzugsweise weist sowohl die Trägerschicht als auch die weitere Schicht eine sehr gute Brand- und Flammenbeständigkeit auf, so dass die unter der Unterdachbahn liegende Dachkonstruktion (beispielsweise die Verschalung oder der Dachstuhl) und/oder das Innere des Gebäudes für einen längeren Zeitraum, insbesondere wenigstens 20 Minuten, bevorzugt wenigstens 30 Minuten, vor einem Übertritt der Flammen ins Gebäudeinnere geschützt wird.

Nachfolgend wird die Baubahn als Unterdachbahn bezeichnet. Erfindungsgemäß versteht es sich jedoch, dass die Ausführungen für die Unterdachbahn in gleicher Weise auch für die Baubahn, vorzugsweise die Fassadenbahn, gelten können.

Die weitere Schicht ist insbesondere außenseitig an der Unterdachbahn angeordnet. Alternativ kann auch vorgesehen sein, dass die weitere Schicht innenseitig bzw. dem Inneren des Gebäudes zugewandt angeordnet ist.

Durch die erfindungsgemäße Ausbildung der Unterdachbahn in zwei, insbesondere separate, Brandschutzschichten kann erreicht werden, dass die Ausbreitung eines Brandes erschwert wird, so dass es den Bewohnern des Gebäudes ermöglicht wird, sich in einem Brandfall in Sicherheit zu bringen.

Gerade einer Brandeinwirkung von außen bzw. einem Brandangriff von außen kann durch die erfindungsgemäße Ausbildung der Unterdachbahn entgegengewirkt werden. Wie zuvor erläutert, können Brandeinwirkungen von außen insbesondere durch einen durch Feuerarbeiten auf der Dachfläche ausgelösten Brand - z. B. durch Unachtsamkeit bei der Verwendung von offenen Flammen - oder durch einen Brand in der Nachbarschaft ausgelöst werden. Bei einem Brand in der Nachbarschaft ist die Unterdachbahn Flugfeuer und/oder strahlender Wärme ausgesetzt. Im Stand der Technik können die bekannten Unterdachbahnen Flugfeuer und/oder überspringende Funken nicht sicher "abwehren". Erfindungsgemäß wird insbesondere ermöglicht, dass die Brandeinwirkungen von außen zumindest im Wesentlichen "beherrschbar" sind. Die "Beherrschung" der Brandeinwirkung kann dabei für einen längeren Zeitraum, beispielsweise wenigstens 10 Minuten, bevorzugt wenigstens 20 Minuten, weiter bevorzugt wenigstens 30 Minuten, ermöglicht werden. Besonders bevorzugt kann ein Feuerüberschlag vom Nachbargebäude eingedämmt werden.

Aber auch einer Brandeinwirkung durch einen Brand im Gebäudeinneren kann durch die erfindungsgemäße Unterdachbahn entgegengewirkt werden, insbesondere derart, dass der Brand nicht unmittelbar auf die Dachkonstruktion und/oder auf Nachbargebäude - zumindest für einen gewissen Zeitraum - übergeht. So kann auch ein Einstürzen des Daches bzw. der Dachkonstruktion verhindert oder zumindest verzögert werden.

Ferner wird durch die erfindungsgemäße Unterdachbahn ermöglicht, die nationalen gesetzlichen Anforderungen an eine Dachkonstruktion im Hinblick auf die Brandschutzvorgaben zu erfüllen, insbesondere zu übertreffen.

In durchgeführten Versuchen konnte insbesondere festgestellt werden, dass sich die Widerstandsfähigkeit gegen den Alterungsprozess der erfindungsgemäßen Unterdachbahn um mehr als 10 % gegenüber dem aus dem Stand der Technik bekannten Unterdachbahnen verbessern lässt. Dabei wurde insbesondere auch die Widerstandsfähigkeit gegen UV-Licht und/oder Witterungseinflüsse getestet. Gleichzeitig konnte die hohe Wasserdichtigkeit beibehalten, sogar insbesondere um bis zu 15 % gesteigert werden.

Insgesamt kann durch die erfindungsgemäße wenigstens zweiteilige Ausbildung der Unterdachbahn in eine als Brandschutzschicht ausgebildete Trägerschicht und in eine als weitere Brandschutzschicht ausgebildete weitere Schicht Leib und Leben von Personen und Sachwerten geschützt werden, wobei ferner die Sicherheit für die Allgemeinheit erhöht wird.

Bei einer besonders bevorzugten Ausführungsform der vorliegenden Erfindung ist vorgesehen, dass die Unterdachbahn und/oder die Trägerschicht und/oder die weitere Schicht schwer entflammbar und/oder nicht brennbar gemäß DIN 4102-1 (Stand: August 2019) und/oder gemäß EN 13501-1 (Stand: August 2019) ausgebildet ist/sind.

Die Einteilung bzw. Klassifizierung des Brandverhaltens der Schichten kann durch Normen bestimmt werden. In der DIN 4102-1 erfolgt eine Einteilung der Baustoffklassen, wobei schwer entflammbare Schichten in die Baustoffklasse B1 und nicht brennbare Schichten in die Baustoffklassen A1 und A2 eingeteilt werden. Insbesondere weist die Unterdachbahn und/oder die Trägerschicht und/oder die weitere Schicht die Baustoffklasse - gemäß der DIN 4102-1 - B1 und/oder A2 auf. Die Baustoffklasse A2 gibt an, dass die jeweilige Schicht nicht brennbar mit brennbaren Bestandteilen ausgebildet ist.

In der europäischen Norm EN 13501-1 lässt sich eine weitere Unterteilung des Brandverhaltens in "Unterklassen" finden. Es erfolgt dort eine Einteilung dahingehend, dass die Rauchentwicklung und das brennende Abtropfen oder Abfallen beurteilt wird. So kann die Zusatzanforderung gestellt werden, dass keine Rauchentwicklung und/oder kein brennendes Abtropfen/Abfallen auftritt. Je nachdem, welche Anforderungen erfüllt werden, erfolgt in den Euroklassen eine weitere Auftrennung. In den vorgenannten Normen ist auch das Prüfverfahren zur Bestimmung der Brandklassen spezifiziert.

Insbesondere erfüllt die Unterdachbahn und/oder die Trägerschicht und/oder die weitere Schicht die Zusatzanforderung(en), dass keine Rauchentwicklung und/oder kein brennendes Abtropfen/Abfallen auftritt.

Als nicht brennbare Baustoffe werden nach DIN 4102-1 insbesondere diejenigen Baustoffe verstanden, die einen Schmelzpunkt von mindestens 1000 °C aufweisen. Durch einen derart hohen Schmelzpunkt kann sichergestellt werden, dass im Brandfall nicht brennbaren Bestandteile nicht anfangen zu brennen, was der Ausbreitung des Feuers entgegenwirkt.

Darüber hinaus ist bei einer weiteren bevorzugten Ausführungsform des Erfindungsgedankens vorgesehen, dass die Unterdachbahn und/oder die Trägerschicht und/oder die weitere Schicht feuerhemmend mit einer Feuerwiderstandsklasse von F30 und/oder hochfeuerhemmend mit einer Feuerwiderstandsklasse F60 gemäß DIN 4102-2 (Stand: August 2019) und/oder gemäß EN 13501-2 (Stand: August 2019) ausgebildet ist/sind. Alternativ oder zusätzlich kann vorgesehen sein, dass die Unterdachbahn und/oder die Trägerschicht und/oder die weitere Schicht einen Feuerwiderstand bzw. eine Feuerwiderstandsklasse der Class A (Class-A burning brand) nach ASTM E 108, insbesondere nach ASTM E 108-17 (Stand: August 2019), aufweist/aufweisen.

Über die vorgenannten Feuerwiderstandsklassen wird angegeben, für welchen Zeitraum die Brandeintragung, insbesondere ins Innere des Gebäudes, verzögert werden kann. Durch den dachoberseitigen Einsatz der Unterdachbahn kann demzufolge eine derartige Dachkonstruktion ermöglicht werden, die im Brandfall, insbesondere bei einer Brandeinwirkung von außen, zu einer Verzögerung der Brandeintragung führen kann. Dies ist dahingehend besonders vorteilhaft, da im inneren des Gebäudes eine Vielzahl von brennbaren Baustoffen eingesetzt werden.

Die erfindungsgemäße Unterdachbahn kann demzufolge einen Übertritt der Flammen zumindest für einen gewissen Zeitraum verhindern. Die Feuerwiderstandsklasse F30 (30 Minuten) und/oder F60 (60 Minuten) gibt letztlich denjenigen Zeitrahmen an, in der die jeweilige Schicht bzw. die Unterdachbahn selbst die Brandschutzeigenschaften bereitstellen und dem Feuer "widerstehen" kann. In den vorgenannten Normen sind ferner insbesondere die Prüfverfahren im Brandfall geregelt.

Letztlich wird durch die vorgenannte Ausbildung der Unterdachbahn und/oder der Trägerschicht und/oder weiteren Schicht ermöglicht, dass die Brandweiterleitung begrenzt wird. Eine Verzögerung der Brandweiterleitung ergibt einen Zeitrahmen, in dem der Brand detektiert, Bewohner flüchten und/oder Einsatz- und Rettungskräfte zur Rettung und zur Löschung des Brandes eintreffen können.

Vorzugsweise ist vorgesehen, dass die Trägerschicht ein textiles Flächengewebe aufweist und/oder als textiles Flächengewebe ausgebildet ist. Insbesondere weist die Trägerschicht ein Glasfasergewebe, Kohlefasergewebe, Keramikfasergewebe, Siliziumfasergewebe, Polykarbonfasergewebe und/oder Metallfasergewebe auf und/oder besteht daraus. Auch Gewebe mit Mischfasern aus wenigstens zwei der vorgenannten Gewebearten sind möglich, also beispielsweise Glasfasern und Kohlefasern, Keramikfasern und Metallfasern oder jegliche andere Kombination aus zwei oder mehr Faserarten der vorgenannten Art. Ganz besonders bevorzugt ist das textile Flächengewebe wenigstens schwer entflammbar gemäß DIN 4102-1 und/oder EN 13501-1 ausgebildet.

Alternativ oder zusätzlich kann vorgesehen sein, dass die Trägerschicht wenigstens ein Vlies aufweist. Das Vlies kann als textiles Flächengewebe ausgebildet sein. Das Vlies kann mineralische Fasern, Aramidfasern, thermoplastische Fasern, bevorzugt hochtemperaturthermoplastische Fasern und/oder Fasern aus thermisch behandelten Thermoplasten, Glaswollefasern und/oder Steinwollefasern aufweisen und/oder daraus bestehen. Insbesondere sind die vorgenannten Fasern schwer entflammbar und/oder nicht brennbar gemäß DIN 4102-1 und/oder EN 13501-1.

Weiterhin kann vorgesehen sein, dass die Trägerschicht Glasfasern, Kohlefasern und/oder Steinwolle aufweist und/oder daraus besteht und/oder als Glasfasermatte und/oder Kohlefasermatte ausgebildet ist. Als Kohlefasern werden insbesondere Kohlenstofffasern bzw. Karbonfasern verstanden.

Bei einer weiteren besonders bevorzugten Ausführungsform ist vorgesehen, dass die Trägerschicht, insbesondere oxidierte, Polyacrylnitril-Fasern (PAN-Fasern) aufweist und/oder daraus besteht.

Vorzugsweise weist das textile Flächengewebe und/oder das Vlies der Trägerschicht eine derartige, insbesondere enge, Verwebung und/oder Maschengröße auf, so dass die Trägerschicht insbesondere luft- und/oder winddicht ausgebildet ist und/oder im Brandfall dem Feuer insbesondere über die Trägerschicht kein "weiterer" Sauerstoff zuführbar ist.

Ferner kann die Trägerschicht auch als Substratschicht ausgebildet sein.

Die vorgenannte vorteilhafte Ausbildung der Trägerschicht ermöglicht insbesondere eine hohe Stabilität der Unterdachbahn und somit auch eine stabilisierende Wirkung für die weitere Schicht. Die weitere Schicht kann insbesondere unmittelbar an und/oder auf der Trägerschicht angeordnet sein, wobei die Trägerschicht letztlich als Träger für die weitere Schicht dienen kann. Die vorteilhafte Ausbildung der Trägerschicht als textiles Flächengewebe und/oder als Vlies ermöglicht letztlich, dass eine wenigstens schwer entflammbare Trägerschicht als Brandschutzschicht bereitgestellt werden kann, die zur Anordnung der weiteren Schicht zur Erhöhung des Brandschutzes verwendet werden kann. Die weitere Schicht kann darüber hinaus insbesondere die Regensicherheit gewährleisten.

Erfindungsgemäß ist vorgesehen, dass die weitere Schicht als Beschichtung ausgebildet ist. Die Beschichtung kann wenigstens einseitig, bevorzugt beidseitig, auf die Trägerschicht, vorzugsweise unmittelbar, aufgebracht sein.

Darüber hinaus kann die weitere Schicht auch als aufextrudierte Schicht ausgebildet sein, insbesondere wobei die weitere Schicht auf die Trägerschicht mittels eines Extrusionsprozesses aufextrudiert worden ist.

Bei einer weiteren ganz besonders bevorzugten Ausführungsform ist vorgesehen, dass die weitere Schicht in einem Extrusionsprozess, insbesondere unter Verwendung eines aufgeschmolzenen Materials, hergestellt worden ist, insbesondere wobei die weitere Schicht auf die Trägerschicht aufextrudiert wird und/oder worden ist.

Alternativ oder zusätzlich kann vorgesehen sein, dass die weitere Schicht als Material einen thermoplastischen Kunststoff, bevorzugt thermoplastisches Polyurethan (TPU), aufweist. Besonders bevorzugt wird das thermoplastische Kunststoffmaterial der weiteren Schicht in einem Extrusionsprozess aufgetragen, vorzugsweise auf die Trägerschicht.

Demzufolge ist bei einer weiteren besonders bevorzugten Ausführungsform vorgesehen, dass das thermoplastisches Polyurethan auf die Trägerschicht als aufextrudierte Schicht aufgebracht worden ist.

Insbesondere ist die weitere Schicht untrennbar, bevorzugt unmittelbar, mit der Trägerschicht verbunden, vorzugsweise wobei die Verbindung der weiteren Schicht zu der Trägerschicht beim und/oder durch den Auftrag der Beschichtung auf die Trägerschicht erreicht wird, insbesondere beim Trocknen der Beschichtung.

Vorzugsweise kann die Beschichtung nach dem Auftrag in einem Ofen getrocknet werden.

Erfindungsgemäß ist die als Beschichtung ausgebildete weitere Schicht auf Basis einer, insbesondere wässrigen, Acrylatdispersion hergestellt. Die insbesondere wässrige Acrylatdispersion kann auf die Trägerschicht aufgestrichen und/oder aufextrudiert werden. Auch ein Aufsprühen der insbesondere wässrigen Acrylatdispersion auf die Trägerschicht ist grundsätzlich möglich.

Weiterhin weist bei einer weiteren vorteilhaften Ausgestaltung des Erfindungsgedankens die als Beschichtung ausgebildete weitere Schicht Acrylate auf und/oder besteht daraus. Als Acrylate können insbesondere Methacrylate, Butylacrylate, Alklylmethacrylate, Ethylacrylate und/oder Polyacrylate vorgesehen sein. Im Zusammenhang mit dem Zustandekommen der Erfindung ist festgestellt worden, dass bei einer Acrylatdispersion, die sich aus Acrylaten der vorgenannten Art zusammensetzt, besonders vorteilhafte Effekte hinsichtlich der Verbesserung des Brandschutzes und der Verhinderung der Brandausbreitung erreicht werden können. Gleichzeitig können die weiteren Anforderungen an eine Unterdachbahn, wie beispielsweise die Bereitstellung der Regensicherheit, sichergestellt werden.

Die weitere Schicht kann insbesondere als Barriere zum Schutz vor UV-Strahlen ausgebildet sein. Die Beständigkeit gegenüber UV-Strahlen kann bevorzugt durch die erfindungsgemäße weitere Schicht um wenigstens 10 %, bevorzugt wenigstens 30 %, gegenüber den aus dem Stand der Technik bekannten Unterdachbahnen erhöht werden. Insbesondere ergibt sich eine derartige Erhöhung der Widerstandsfähigkeit gegen UV-Strahlung bei der Ausbildung der weiteren Schicht als Beschichtung, die insbesondere auf einer wässrigen Acrylatdispersion basiert.

Ganz besonders bevorzugt ist die weitere Schicht ungeschäumt und/oder hydrophobierungsmittelzusatzfrei ausgebildet. Alternativ oder zusätzlich kann vorgesehen sein, dass die weitere Schicht diffusionsbremsend und/oder diffusionssperrend ausgebildet ist. Besonders bevorzugt ist die ungeschäumte weitere Schicht diffusionssperrend ausgebildet. Der weiteren Schicht müssen demzufolge insbesondere weder Schäumungsmittel zugesetzt werden, noch muss die insbesondere wässrige Acrylatdispersion beim Aufbringen auf die Trägerschicht aufgeschäumt werden. Aufgrund der erfindungsgemäßen Ausbildung der als Beschichtung ausgebildeten weiteren Schicht kann ferner auf eine Hydrophobierungsmittelschicht, die in der Regel außenseitig auf die Unterdachbahn im Stand der Technik aufgebracht wird, verzichtet werden.

Alternativ oder zusätzlich kann vorgesehen sein, dass die weitere Schicht geschäumt und/oder hydrophobiert ausgebildet ist, insbesondere zur Verbesserung der Witterungseigenschaften der weiteren Schicht.

Erfindungsgemäß weist die weitere Schicht Füllstoffpartikel auf, insbesondere anorganische Füllstoffpartikel. Die Füllstoffpartikel weisen als Material Blähgraphit auf und/oder bestehen daraus.

Ganz besonders bevorzugt ist die weitere Schicht als

Beschichtung ausgebildet, wobei in der, insbesondere wässrigen, Acrylatdispersion die Füllstoffpartikel eingefasst und/oder angeordnet werden können. Vorzugsweise sind nicht brennbare Füllstoffpartikel gemäß DIN 4102-1 und/oder gemäß EN 13501-1 vorgesehen.

Blähgraphit wird auch als expandierbarer Graphit bezeichnet. Darüber hinaus kann Blähgraphit derart ausgebildet sein, dass durch Erhitzung des Material die Expansion, vorzugsweise auf ein Vielfaches des Ausgangsvolumens, veranlasst wird, insbesondere ab einer Temperatur von wenigstens 200 °C, bevorzugt wenigstens 150 °C. Demzufolge eignet sich Blähgraphit bevorzugt für den Flammschutz. So kann durch Erhitzung ferner eine Intumeszenz-Schicht auf der Materialoberfläche gebildet werden. Dies verlangsamt insbesondere zum einen die Brandausweitung und wirkt zum anderen insbesondere den für den Menschen gefährlichsten Auswirkungen eines Brandes, nämlich beispielsweise der Bildung toxischer Gase und Rauch, entgegen.

Durch die mineralische bzw. anorganische Ausbildung der Füllstoffpartikel kann der Bestandteil der nicht brennbaren Bestandteile der weiteren Schicht erhöht werden. wonach der Brandschutz verbessert werden kann. Durch die Integration der bevorzugt anorganischen Füllstoffpartikel kann insbesondere erreicht werden, dass die Feuerwiderstandsklasse erhöht werden kann.

Insbesondere kann eine körnige Beschichtung bereitgestellt werden.

Alternativ oder zusätzlich kann auch vorgesehen sein, dass Füllstoffpartikel in der Trägerschicht und/oder in anderen Schichten der Unterdachbahn integriert sind, insbesondere zur Erhöhung der anorganischen Anteile der jeweiligen Schicht. Ganz besonders bevorzugt sind mineralische Füllstoffpartikel, wie Quarzkörner und/oder Mineralkörner, in der Trägerschicht eingefasst.

Bei einer weiteren ganz besonders bevorzugten Ausführungsform ist vorgesehen, dass die Füllstoffpartikel wenigstens einen Gesamtanteil von 30 Gew.-%, bevorzugt wenigstens 40 Gew.-%, weiter bevorzugt wenigstens 50 Gew.-% und insbesondere von wenigstens 60 Gew.-%, mit Partikeln einer mittleren Korngröße bzw. Partikelgröße zwischen 0,01 bis 5 mm, bevorzugt zwischen 0,02 bis 3 mm, weiter bevorzugt zwischen 0,03 bis 2 mm, vorzugsweise zwischen 0,05 bis 1 mm, aufweisen.

insbesondere wird sehr feinkörniger Sand oder Blähgraphit als Füllstoffpartikel verwendet.

Vorzugsweise ist vorgesehen, dass die Füllstoffpartikel einen Gewichtsanteil an der weiteren Schicht von wenigstens 20 Gew.-%, bevorzugt wenigstens 30 Gew.-%, weiter bevorzugt wenigstens 50 Gew.-%, aufweisen. Die vorgenannten Angaben beziehen sich insbesondere auf die weitere Schicht im Einsatzzustand, insbesondere in einem getrockneten Zustand.

In diesem Zusammenhang versteht es sich bevorzugt, dass auch unterschiedliche Materialen für die Füllstoffpartikel eingesetzt werden können, insbesondere wobei wenigstens ein Materialtyp, bevorzugt Blähgraphit, einen Anteil an der gesamten Füllstoffpartikelmenge von wenigstens 10 Gew.-%, bevorzugt wenigstens 25 Gew.-%, weiter bevorzugt wenigstens 50 Gew.-%, aufweisen kann. Die weiteren Materialtypen können mineralische bzw. anorganische Füllstoffe umfassen, insbesondere Bariumsulfat und/oder Antimontrioxid.

Bevorzugt ist bei dem Einsatz von unterschiedlichen Materialtypen für die Füllstoffpartikel vorgesehen, dass wenigstens ein Materialtyp, insbesondere Blähgraphit, einen Gewichtsanteil an der weiteren Schicht von wenigstens 5 Gew.-%, bevorzugt wenigstens 10 Gew.-%, weiter bevorzugt wenigstens 15 Gew.-% und insbesondere von 17 Gew.-% +/- 10 %, aufweisen kann. Die vorgenannten Angaben beziehen sich insbesondere auf die weitere Schicht im Einsatzzustand, insbesondere in einem getrockneten Zustand.

Vorzugsweise ist vorgesehen, dass wenigstens ein weiterer Anteil von weiteren Füllstoffpartikeln vorgesehen ist, wobei die weiteren Füllstoffpartikel eine Korngrö-ße aufweisen, die größer ist als die mittlere Korngröße der Füllstoffpartikel.

Es hat sich insbesondere beim Zustandekommen der Erfindung gezeigt, dass bei einer derartigen Korngröße der Füllstoffpartikel bzw. bei einer derartigen Korngrö-ßenverteilung der Füllstoffpartikel die Brandschutzwirkung der gesamten Unterdachbahn, bevorzugt um wenigstens 40 %, verbessert werden kann, insbesondere wobei die Füllstoffpartikel in die als Beschichtung ausgebildete weitere Schicht eingefasst werden können.

Durch die insbesondere feinen Füllstoffpartikelkörner kann ein einfacher Auftrag der weiteren Schicht, insbesondere auf die Trägerschicht, erfolgen.

Ferner weist bevorzugt die weitere Schicht wenigstens eine Streuschicht auf. Die Streuschicht kann an der Außenseite der Unterdachbahn vorgesehen sein. Besonders vorteilhaft ist es, wenn die Streuschicht auf und/oder an und/oder in der als Beschichtung ausgebildeten weiteren Schicht vorgesehen ist. Insbesondere kann die Streuschicht mittels einer Besandung hergestellt worden sein. Bei einer Besandung ist vorgesehen, dass die Oberfläche mit Streugut, insbesondere, vorzugsweise feinkörniger, Sand, bestreut wird, wonach sich eine obere Streuschicht ergibt. Insbesondere ist die Streuschicht auf bzw. an der der Bewitterungsseite zugewandten Seite der Unterdachbahn angeordnet. Ganz besonders bevorzugt kann die Streuschicht, die - zuvor hinsichtlich ihrer Eigenschaften bereits eingeführten - Füllstoffpartikel oder zumindest einen Anteil der Füllstoffpartikel aufweisen.

Alternativ oder zusätzlich kann vorgesehen sein, dass die weitere Schicht Füllstoffpartikel aufweist, wobei ebenfalls wenigstens eine Streuschicht gebildet durch Füllstoffpartikel vorgesehen sein kann. Die Füllstoffpartikel, die in der weiteren Schicht integriert sind, können sich von den Füllstoffpartikeln der Streuschicht unterscheiden und/oder zumindest im Wesentlichen zu diesen identisch sein. Vorteilhafterweise weisen die Füllstoffpartikel in der Streuschicht wenigstens eines der zuvor beschriebenen vorteilhaften Merkmale auf.

Die Streuschicht kann auf die weitere Schicht aufgebracht sein, insbesondere durch Aufstreuen der Füllstoffpartikel auf die, insbesondere feuchte und/oder nicht ausgehärtete, außenseitige Oberfläche der weiteren Schicht. So kann insbesondere ein Verbinden für Füllstoffpartikel der Streuschicht mit der, insbesondere wässrigen, Acrylatdispersion der als Beschichtung ausgebildeten weiteren Schicht erreicht werden.

Darüber hinaus ist die Streuschicht insbesondere als Bestandteil der weiteren Schicht anzusehen. Dabei kann vorgesehen sein, dass die "restliche" weitere Schicht in die Streuschicht übergeht. Die Streuschicht kann sowohl vollflächig als auch teilflächig ausgebildet sein.

Vorzugsweise kann durch die Streuschicht der Anteil an anorganischen Bestandteilen der weiteren Schicht erhöht werden. Ganz besonders bevorzugt werden anorganische Bestandteile in der Streuschicht eingesetzt, beispielsweise mineralische Füllstoffpartikel.

Vorzugsweise weist die weitere Schicht einen Anteil von wenigstens 2 Gew.-%, bevorzugt wenigstens 5 Gew.-%, weiter bevorzugt zwischen 10 Gew.-% bis 70 Gew.-%, an Füllstoffpartikeln auf. Alternativ oder zusätzlich kann vorgesehen sein, dass die Streuschicht einen Anteil von wenigstens 20 Gew.-%, bevorzugt wenigstens 30 Gew.-%, weiter bevorzugt zwischen 35 bis 100 Gew.-% und vorzugsweise zwischen 50 bis 99 Gew.-%, an den Füllstoffpartikeln aufweist.

Bei einer weiteren vorteilhaften Ausführungsform ist vorgesehen, dass die Schichtdicke der Trägerschicht größer, bevorzugt um wenigstens 20 %, weiter bevorzugt um wenigstens 50 %, vorzugsweise zwischen 65 % bis 200 % größer, als die Schichtdicke der weiteren Schicht ausgebildet ist. Insbesondere kann Material der weiteren Schicht gegenüber Material der Trägerschicht eingespart werden. Die bevorzugt als Beschichtung ausgebildete weitere Schicht kann demzufolge als zumindest im Wesentlichen dünner Film auf die Trägerschicht aufgetragen werden, wobei die Trägerschicht die Stabilität der weiteren Schicht erhöhen oder gewährleisten und letztlich auch als Träger für die weitere Schicht dienen kann. Insbesondere können die mechanischen Eigenschaften der Unterdachbahn, insbesondere die Reißfestigkeit und/oder Reißdehnung, durch die Trägerschicht sichergestellt werden.

Alternativ kann vorgesehen sein, dass die Schichtdicke der weiteren Schicht grö-ßer, bevorzugt um wenigstens 20 %, weiter bevorzugt größer als 50 %, vorzugsweise zwischen 65 % bis 200 % größer, als die Schichtdicke der Trägerschicht ausgebildet ist. Durch das vorgenannte Größenverhältnis kann erfindungsgemäß der Brandschutz dahingehend verbessert werden, dass die als Brandschutzschicht ausgebildete weitere Schicht einen höheren Anteil an der gesamten Unterdachbahn als die Trägerschicht aufweist. Die weitere Schicht weist insbesondere bessere Brandschutzeigenschaften und/oder eine höhere Feuerwiderstandsklasse als die Trägerschicht auf. Durch den erhöhten Anteil der weiteren Schicht an der Unterdachbahn kann demzufolge insbesondere gewährleistet werden, dass die Unterdachbahn als Schichtenverbund eine sehr gute Flammenbeständigkeit und/oder einen sehr guten Widerstand gegen die Weiterleitung eines Brandereignisses aufweist.

Bei einer weiteren bevorzugten Ausführungsform weist die Trägerschicht ein Flächengewicht zwischen 20 bis 2000 g/m², bevorzugt zwischen 30 bis 800 g/m², weiter bevorzugt zwischen 40 bis 400 g/m², auf. Insbesondere ergibt sich ein Flächengewicht in der vorgenannten Größenordnung bei der Ausbildung der Trägerschicht als textiles Flächengewebe und/oder als Vlies. Besonders vorteilhaft wird ein derartiges Vlies gewählt, das ein möglichst geringes Flächengewicht aufweist, jedoch weiterhin die mechanischen Eigenschaften der Unterdachbahn - unter Einhaltung seiner Brandschutzfähigkeit - gewährleisten kann.

Darüber hinaus ist bei einer weiteren besonders bevorzugten Ausführungsform vorgesehen, dass die weitere Schicht ein Flächengewicht zwischen 20 bis 2000 g/m², bevorzugt zwischen 30 bis 800 g/m², weiter bevorzugt zwischen 40 bis 400 g/m², aufweist. In durchgeführten Versuchen hat sich gezeigt, dass das vorgenannte Flächengewicht der weiteren Schicht zur weiteren Verbesserung der Brandschutzfähigkeit der gesamten Unterdachbahn führen kann.

Vorzugsweise ist die weitere Schicht mit der Trägerschicht, insbesondere unmittelbar, verbunden. Dabei kann die weitere Schicht beispielsweise auf die Trägerschicht aufgesprüht, aufgestrichen, aufextrudiert und/oder aufgelegt werden. Ferner kann die weitere Schicht mit der Trägerschicht - zumindest teilflächig, bevorzugt vollflächig - verklebt, stoffschlüssig und/oder formschlüssig verbunden sein. Alternativ oder zusätzlich kann vorgesehen sein, dass die weitere Schicht wenigstens einseitig außenseitig auf die Trägerschicht, insbesondere auf der der Witterung zugewandten Seite, aufgebracht ist. Bevorzugt ist die weitere Schicht beidseitig auf die Trägerschicht aufgebracht bzw. an dieser angeordnet. Bei einer weiteren Ausführungsform kann auch vorgesehen sein, dass die weitere Schicht teilflächig und/oder vollflächig auf wenigstens eine Seite der Trägerschicht aufgebracht und/oder angeordnet ist.

Bei einer beidseitigen Anordnung der weiteren Schicht auf und/oder an der Trägerschicht kann insbesondere der Brandschutz gegenüber der Außenseite (Brandeinwirkung von außen) als auch gegenüber der Innenseite (Brandeinwirkung durch das Innere des Gebäudes) erhöht werden. Insbesondere kann somit eine verbesserte Abwehr gegenüber einem Brand und/oder gegenüber Flammen ermöglicht werden.

Bei einer weiteren bevorzugten Ausführungsform der vorliegenden Erfindung ist die weitere Schicht als Metallschicht, insbesondere aufweisend Aluminium, Kupfer, Silber, Eisen und/oder Platin, ausgebildet. Ganz besonders bevorzugt ist die als Metallschicht ausgebildete weitere Schicht diffusionsdicht. Die Metallschicht kann über eine Metallisierung der Trägerschicht, beispielsweise über eine Metallbedampfung gewonnen werden und/oder als Metallisierung der Trägerschicht ausgebildet sein. Die Metallschicht kann vorzugsweise unmittelbar auf die Trägerschicht aufgebracht sein. Durch die Metallschicht kann das Brandverhalten der gesamten Unterdachbahn verbessert werden, da das Metall und/oder die Metalllegierung einen hohen Schmelzpunkt aufweisen kann, insbesondere über 800 °C. Insbesondere ist die als Metallschicht ausgebildete weitere Schicht nicht brennbar gemäß DIN 4102-1 und/oder EN 13501-1.

Ferner kann die Unterdachbahn und/oder die weitere Schicht auf wenigstens einer Außenseite, insbesondere auf der der Witterung zugewandten Seite, rutschhemmend ausgeführt sein. Vorzugsweise ist die rutschhemmende Ausbildung im trockenen und nassen Zustand gewährleistet, um insbesondere Unfälle bei der Verlegung zu vermeiden.

Die rutschhemmende Oberfläche der Unterdachbahn und/oder weiteren Schicht kann aufgeraut und/oder rau und/oder oberflächenstrukturiert ausgebildet sein und/oder insbesondere rasterförmig oberflächenstrukturiert sein. Insbesondere kann die raue und/oder unebene Oberflächenstruktur durch die Streuschicht der weiteren Schicht und/oder durch die Füllstoffpartikel in der weiteren Schicht erzeugt werden. Durch die raue Oberfläche der Unterdachbahn wird insbesondere der Haftreibungskoeffizient derart verbessert, dass sich eine erhöhte Haftreibung beim Betreten der Oberfläche der Unterdachbahn ergibt. Durch die verbesserte Rutschhemmung der Unterdachbahn kann die Arbeitssicherheit bei Dacharbeiten erhöht werden. Bei Dacharbeiten bewegt sich ein Dachdecker auf der Oberfläche der Unterdachbahn bzw. arbeitet auf dieser. Neben der Erhöhung der anorganischen Bestandteile kann demzufolge durch die Streuschicht und/oder die Füllstoffpartikel eine Verbesserung der mechanischen Eigenschaften der Unterdachbahn erreicht werden, insbesondere der Rutschhemmung.

Vorzugsweise weist die Unterdachbahn eine geringe Brandlast mit einem Energiegehalt - auch Heizwert genannt - unter 400 MJ/m² auf. Bevorzugt beträgt die Brandlast unter 200 MJ/m², weiter bevorzugt zwischen 1 bis 100 MJ/m², weiter bevorzugt weiter zwischen 5 bis 80 MJ/m² und insbesondere zumindest im Wesentlichen kleiner oder gleich 10,5 MJ/m². Aus Sicht des vorbeugenden Brandschutzes ist die Begrenzung der Brandlast eines Dachaufbaus sehr sinnvoll. Die Brandlast wird dabei in Megajoule pro Quadratmeter (MJ/m²) angegeben und gibt den gemessenen Wert des Baustoffes bzw. des Bauteils (im vorliegenden Fall der Unterdachbahn) im eingebauten Zustand wieder. Dieser Wert ist dabei so gering wie möglich zu halten.

Besonders bevorzugt wird eine brandlastarme Dampfsperre eingesetzt, wobei der Anteil der nicht brennbaren Bestandteile möglichst hoch ist. Durch die Verringerung der Brandlast kann im Brandfall ein Ausbreiten des Feuers verhindert oder zumindest verzögert werden. Wäre eine zu hohe Brandlast vorhanden, würde insbesondere nach bzw. während eines Brandes aufgrund der Unterdachbahn der Brand noch weiter "gefördert" werden. Beispielsweise wird in der DIN 18234 (Stand: August 2019) im Hinblick auf Dampfsperren geregelt, dass bei brandlastarmen Dampfsperren, insbesondere aus Polyethylen oder Aluminiumverbundfolien, gefordert wird, dass diese einen Heizwert bzw. eine Brandlast unter 10,5 MJ/m² aufweisen und/oder den Brennwert von 11,6 MJ/m² nicht überschreiten (Brandlastminimierung). Dies wird über eine separate Prüfung nachgewiesen. Durch die geringe Brandlast kann der Brandschutz demzufolge weiter verbessert werden. Erfindungsgemäß ist die Trägerschicht und die weitere Schicht, bevorzugt auch die Unterdachbahn, bis mindestens 450 °C, bevorzugt bis mindestens 600 °C, weiter bevorzugt bis mindestens 800 °C, temperaturfest bzw. temperaturstabil ausgeführt. Durch die temperaturfeste Ausbildung wird insbesondere gewährleistet, dass die weitere Schicht und die Trägerschicht, bevorzugt auch die Unterdachbahn, bis zu dieser Temperatur nicht schmelzen bzw. einen höheren Schmelzpunkt aufweisen.

Demzufolge fängt das Material insbesondere bis zur vorgenannten Temperaturgrenze nicht an zu brennen. Die Ausbreitung eines Feuers kann demzufolge möglichst lange verhindert bzw. eingedämmt werden.

Vorzugsweise weist die Unterdachbahn wenigstens einseitig, insbesondere beidseitig, außenseitig - entweder auf der der Witterung zugewandten Außenseite und/oder auf der dem Gebäudeinneren zugewandten Innenseite - wenigstens eine Klebeschicht zur Verklebung, bevorzugt zur Nahtselbstverklebung, benachbarter Unterdachbahnen auf. Die Klebeschicht ist im Hinblick auf die Verlegung und die Verbindung von Unterdachbahnen (Unterdachbahnreihen) besonders vorteilhaft.

Bei der Verlegung von Unterdachbahnen ist vorgesehen, dass Reihen von Unterdachbahnen unmittelbar aneinander angrenzend und/oder zumindest bereichsweise aufeinander aufliegend zu einer Dichtebene miteinander verbunden werden. Durch die Klebeschicht kann die Verklebung der Unterdachbahnen ermöglicht werden.

Durch die in der Unterdachbahn integrierte Klebeschicht entfällt die Notwendigkeit einer zusätzlichen Verklebung und/oder eines zusätzlichen Klebemittels, das auf die Unterdachbahn aufbringbar ist. Bei weiteren Ausführungsformen kann dies jedoch grundsätzlich auch vorgesehen sein.

Die Klebeschicht kann beispielsweise mit einem Liner (insbesondere eine Abziehfolie) abgedeckt werden. Nach Abziehen des Liners kann die Verklebung der Unterdachbahnen erfolgen. Insbesondere werden die Unterdachbahnreihen überlappend zueinander verlegt, woraus sich eine Dichtebene aus Unterdachbahnen ergibt. Dabei ist auf wenigstens einer Unterdachbahn auf der der weiteren Unterdachbahn zugewandten Seite eine Klebeschicht vorgesehen.

Die Klebeschicht kann in weiteren Ausführungsformen teilflächig, vorzugsweise streifenförmig, ausgebildet sein und/oder an wenigstens einem Längsrand der Unterdachbahn vorgesehen sein. Ganz besonders bevorzugt sind wenigstens zwei Längsklebestreifen auf der Unterdachbahn vorgesehen.

Dabei gibt es ganz unterschiedliche Möglichkeiten der Anordnung einer Klebeschicht. So ist es grundsätzlich möglich, dass überhaupt nur an einem Längsrand eine Klebeschicht vorgesehen ist. Bei einer alternativen Ausführungsform ist an einem Längsrand ober- und unterseitig eine Klebeschicht vorgesehen. Bei einer anderen Ausführungsform sind auf gegenüberliegenden Längsrändern jeweils auf gleichen Seiten jeweils eine Klebeschicht vorgesehen, während bei einer anderen Ausführungsform an gegenüberliegenden Längsrändern auf gegenüberliegenden Seiten Klebeschichten vorgesehen sind. Auch ist es grundsätzlich möglich, dass an beiden Längsrändern ober- und unterseitig Klebeschichten vorgesehen sind.

Durch die Klebeschichten kann letztlich die Regensicherheit erhöht und eine Winddichtigkeit der Verbindung von zwei benachbarten Unterdachbahnen im Randbereich realisiert werden.

Alternativ oder zusätzlich kann auch vorgesehen sein, dass die Klebeschicht sich zumindest vollflächig über wenigstens eine Seite der Unterdachbahn, insbesondere auf der Außenseite und/oder auf der Innenseite, erstreckt. Bei Verklebung benachbarter Unterdachbahnen kann derjenige Bereich, der überlappend zu einer weiteren Reihe der Unterdachbahn angeordnet ist, beispielsweise durch Erwärmung zur Verklebung "aktiviert" werden. Der "übrige" Klebebereich, auf bzw. an dem keine weitere Unterdachbahn angeordnet ist, kann im "nicht aktivierten" Zustand insbesondere keine klebenden Eigenschaften aufweisen.

Im Hinblick auf den Brandschutz ist vorteilhafterweise vorgesehen, dass die Klebeschicht flammenhemmend bzw. feuerhemmend ausgeführt ist. Vorzugsweise weist die Klebeschicht eine Feuerwiderstandsklasse von F30 auf und/oder ist hochfeuerhemmend mit einer Feuerwiderstandsklasse von F60 gemäß DIN 4102-2 (Stand: August 2019) und/oder EN 13501-2 (Stand: August 2019) ausgerüstet. Die vorgenannte Ausrüstung bzw. Ausbildung der Klebeschicht verbessert die Brandschutzfähigkeit der gesamten Unterdachbahn. Vorzugsweise weist die Klebeschicht schwer entflammbare und/oder nicht brennbare Bestandteile auf und/oder ist schwer entflammbar und/oder nicht brennbar ausgeführt.

Vorzugsweise ist die Klebeschicht als wenigstens schwer brennbare und/oder entflammbare selbstklebende Haftkleberschicht ausgeführt.

Bei einer weiteren vorteilhaften Ausführungsform des Erfindungsgedankens weist die Unterdachbahn eine Überwachungseinrichtung auf und/oder der Unterdachbahn ist eine Überwachungseinrichtung zugeordnet. Dabei kann die Überwachungseinrichtung in den Schichtaufbau der Unterdachbahn integriert sein und/oder als separate Einrichtung ausgebildet und der Unterdachbahn zugeordnet sein.

Insbesondere weist die Überwachungseinrichtung ferner wenigstens eine Messeinrichtung, vorzugsweise einen Rauchmelder und/oder einen Wärmemelder, zur Detektion eines Feuers bzw. eines Brandes auf. Der Messeinrichtung kann eine Alarmeinrichtung der Überwachungseinrichtung zugeordnet sein, wobei über die Alarmeinrichtung ein Alarmsignal ausgesendet werden kann, insbesondere im Falle eines Feuers bzw. eines Brandes.

Durch die Überwachungseinrichtung kann nach der Registrierung und/oder der Detektion eines Feuers und/oder Brandes eine Alarmierung, insbesondere drahtlos, von Löschpersonal (Feuerwehr) und/oder von Rettungspersonal erfolgen. Dies dient sowohl zum Schutz der Sachwerte, insbesondere durch Verhinderung der Ausbreitung des Feuers, aber auch zum Schutz von Leben, da über die Überwachungseinrichtung Rettungspersonal alarmiert werden kann. Grundsätzlich kann auch - alternativ oder zusätzlich - die Aussendung eines Warntons über die Alarmeinrichtung vorgesehen sein, so dass insbesondere bei einer Brandeinwirkung von außen Bewohner des Gebäudes frühzeitig über das Auftreten eines Brandes informiert werden können.

Bei einer weiteren Ausführungsform kann auch eine externe Löscheinrichtung der Überwachungseinrichtung derart zugeordnet sein, dass bei Detektion eines Feuers bzw. eines Brandes eine Aktivierung der Löscheinrichtung derart erfolgt, dass das Feuer insbesondere in der Nähe und/oder beim Entstehungsort, gelöscht werden kann. Über die Löscheinrichtung kann eine Löschung des Feuers beispielsweise mittels Wasser, Sand und/oder Löschschaum erfolgen. Dies dient der weiteren Verbesserung des Brandschutzes.

Besonders bevorzugt ist die Trägerschicht und/oder die weitere Schicht und/oder die Unterdachbahn wasserabweisend und/oder wasserdicht ausgebildet. Vorzugsweise weist die Unterdachbahn und/oder die weitere Schicht und/oder die Trägerschicht eine Wassersäule von 0,5 bis 50 m, bevorzugt zwischen 0,8 bis 40 m, weiter bevorzugt zwischen 0,9 bis 30 m, auf.

Zur Beurteilung der Wasserdichtigkeit von Unterdachbahnen sind die DIN 1928 (Stand: August 2019) und die DIN 20811 (Stand: August 2019) heranzuziehen. Diese DIN-Normen zeigen Prüfbedingungen bzw. Bestimmungsverfahren zur Bestimmung der Wasserdichtigkeit. Die Wasserdichtigkeit bestimmt dabei maßgeblich den Einsatz der Unterdachbahn, da diese besonders auf Dächern bei einer Freibewitterung Feuchtigkeit und eventuell Schlagregen ausgesetzt sind. Alle vorgenannten Wassersäulen entsprechen einem hohen Widerstand gegen den Wasserdurchgang gemäß DIN 20811.

Bei einer besonders bevorzugten Ausführungsform ist vorgesehen, dass die Trägerschicht und/oder die weitere Schicht und/oder die Unterdachbahn als Dampfbremse, vorzugsweise wasserdampfbremsend mit einer wasserdampfdiffusionsäquivalenten Luftschichtdicke (s_{d}-Wert) zwischen 0,5 bis 1500 m, bevorzugt zwischen 10 bis 1500 m, weiter bevorzugt 100 bis 1500 m, ausgebildet ist. Alternativ oder zusätzlich kann vorgesehen sein, dass die Trägerschicht und/oder die weitere Schicht und/oder die Unterdachbahn als Dampfsperre, vorzugsweise wasserdampfsperrend mit einer wasserdampfdiffusionsäquivalenten Luftschichtdicke (s_{d}-Wert) von größer als 1500 m, ausgebildet ist. Die vorgenannte Ausbildung kann insbesondere über die weitere Schicht, die die Diffusionsdichte und/oder die diffusionssperrende Eigenschaften bereitstellt, erreicht werden.

Der s_{d}-Wert charakterisiert den Wasserdampfdiffusionswiderstand. Die Dampfsperre kann einen hohen Feuchtigkeitsschutz für eine Untergrundfläche, auf der sie verlegt ist, gewährleisten. Die Bestimmung des s_{d}-Wertes ist insbesondere über die DIN 4108 (Stand: August 2019, Wärmeschutz im Hochbau) durch den dritten Teil (klimabedingter Feuchteschutz; Anforderung, Berechnungsverfahren und Hinweise für die Planung und Ausführung) geregelt. Die DIN 4108-3 definiert als Grenzwert für die Diffusionsoffenheit einen s_{d}-Wert von kleiner als 0,5. Als Grenzwert für die Dampfsperre wird ein s_{d}-Wert von 1500 m festgelegt. Demzufolge ist die Unterdachbahn bevorzugt so ausgeführt, dass sie wenigstens dampfbremsend ausgebildet ist.

Alternativ oder zusätzlich kann vorgesehen sein, dass die Trägerschicht und/oder die weitere Schicht und/oder die Unterdachbahn diffusionsoffen, vorzugsweise wasserdampfdurchlässig mit einer wasserdampfdiffusionsäquivalenten Luftschichtdicke (s_{d}-Wert) zwischen 0,01 bis 1 m, bevorzugt zwischen 0,02 bis 0,5 m, weiter bevorzugt zwischen 0,03 bis 0,3 m und insbesondere zumindest im Wesentlichen kleiner oder gleich 5 cm, ausgebildet ist. Die vorgenannte Diffusionsoffenheit kann ermöglichen, dass Feuchtigkeit aus dem Inneren des Gebäudes durch die erfindungsgemäße Unterdachbahn entweichen kann.

Es kann auch vorgesehen sein, dass die weitere Schicht als Dampfbremse und/oder Dampfsperre ausgebildet ist, wobei die Trägerschicht diffusionsoffen ausgebildet sein kann. Insgesamt könnte sich so eine dampfbremsende oder eine dampfsperrende Ausbildung der Unterdachbahn ergeben.

Bei einer weiteren Ausführungsform der Erfindung ist vorgesehen, dass die Unterdachbahn wenigsten eine, vorzugsweise wasserdichte, Funktionsschicht aufweist. Diese Ausführungsform ist insbesondere in Kombination mit der wasserdampfdurchlässigen Ausbildung der Unterdachbahn vorgesehen. Die Funktionsschicht kann als mikroporöse Membranschicht und/oder als monolithische Membranschicht ausgebildet sein. Als Material für die Funktionsschicht kann ein Kunststoff, bevorzugt auf polyolefinischer Kunststoffbasis und/oder thermoplastisches Polyurethan (TPU), und/oder Polyacrylat, vorgesehen sein. Die Funktionsschicht kann aus diesem Kunststoffmaterial bestehen und/oder dieses aufweisen.

Unter einer monolithischen Membranschicht wird insbesondere eine geschlossenzellige und/oder porenfreie Schicht einer Membran verstanden. Monolithische Membranschichten können insbesondere einen besonders guten Schutz gegen Schlagregen bei gleichzeitiger Diffusionsoffenheit gewährleisten. Anders als bei der herkömmlichen mikroporösen Membranschicht kann der Feuchtetransport aktiv entlang der Molekülketten durch Diffusion stattfinden.

Des Weiteren wird unter einer Membranschicht eine derartige Schicht verstanden, die eine selektive Durchlässigkeit aufweist. Membranen können grundsätzlich unterschiedlich beschaffen und insbesondere als Folien oder Textilien ausgebildet sein. Membranschichten stellen beispielsweise beim Einsatz als bzw. in einer Unterdachbahn sicher, dass die äußeren Einflüsse der Witterung keinen schädlichen Einfluss für das Gebäudeinnere bewirken.

Vorzugsweise weist die als monolithische Membranschicht ausgebildete Funktionsschicht als Material Kunststoff und/oder Kunstharz auf und/oder besteht daraus. Des Weiteren ist insbesondere ein elastomeres und/oder ein thermoplastisches Material als Material für die Funktionsschicht vorgesehen, vorzugsweise Polyurethankunststoff, insbesondere thermoplastisches Polyurethan (TPU). Bevorzugt besteht die Funktionsschicht aus thermoplastischem Polyurethan. Eine TPU-Folie weist eine hohe mechanische Stabilität auf und ist insbesondere zumindest im Wesentlichen beständig gegen Witterungs- und/oder Umwelteinflüsse.

Thermoplastisches Material ist insbesondere intrinsisch flammenhemmend und weist ein gutes Langzeitalterungsverhalten auf, vorzugsweise für Standzeiten von größer oder gleich 10 Jahren.

Die als mikroporöse Membranschicht ausgebildete Funktionsschicht ist insbesondere auf polyolefinischer Kunststoffbasis ausgeführt. Polyolefine sind Polymere, die aus Alkenen, wie Ethylen, Polypropylen, 1-Buten oder Isobuten, durch Kettenpolymerisation hergestellt werden. Polyolefine sind gesättigte Kohlenwasserstoffe, die mengenmäßig die größte Gruppe der Kunststoffe ergeben. Darüber hinaus sind sie den teilkristallinen Thermoplasten zuzuordnen, wobei sich Thermoplaste insbesondere leicht aufgrund einer möglichen reversiblen Verformung verarbeiten lassen. Zusätzlich zeichnen sich Polyolefine durch eine gute chemische Beständigkeit und besonders gute elektrische Isoliereigenschaften aus.

Im Übrigen bedeutet "mikroporös" im Zusammenhang mit der Membranschicht, dass die Membranschicht mikroskopisch kleine Löcher bzw. Durchbrechungen aufweist, die groß genug ausgebildet sind, dass Wasserdampfmoleküle durch sie hindurch diffundieren können. Gleichzeitig sind diese Löcher bzw. Durchbrechungen jedoch so klein ausgestaltet, dass größere Wassermoleküle, insbesondere Wassermoleküle von Regentropfen, nicht durch die Membranschicht hindurch gelangen können. In diesem Fall gibt die Mikroporösität an, dass die Unterdachbahn gleichzeitig sowohl wasserdicht als auch wasserdampfdurchlässig ausgeführt ist. Die mikroporöse Struktur der Membranschicht wird durch eine spezielle Vorbehandlung erzeugt. So werden dem zu verarbeitenden Kunststoffmaterial Füllstoffe, vorzugsweise Calciumcarbonate und insbesondere Kreidepartikel, zugegeben. Dieses Material wird anschließend zur Herstellung der Membranschicht extrudiert und in einem weiteren Schritt bei hohen Temperaturen mono- oder biaxial gereckt und dann unter Spannung abgekühlt. Durch das Recken reißt die extrudierte Membranschicht insbesondere im Bereich der Füllstoffe auf, wodurch sich die Mikroporösität ergibt.

Bei einer weiteren bevorzugten Ausführungsform ist vorgesehen, dass wenigstens eine weitere Trägerschicht vorgesehen ist, die insbesondere mit der Trägerschicht und/oder der der weiteren Schicht fest verbunden, insbesondere verklebt, werden kann. Die Verklebung kann bevorzugt mittels eines reaktiven PU-Hotmelts durchgeführt werden.

In diesem Zusammenhang versteht es sich, dass erfindungsgemäß die Ausführungen zu der Trägerschicht in gleicher Weise auch für die weitere Trägerschicht gelten können, ohne dass dies einer weiteren expliziten Erwähnung bedarf.

Des Weiteren kann gemäß einer weiteren bevorzugten Ausgestaltung des Erfindungsgedankens vorgesehen sein, dass die Trägerschicht mit einer, insbesondere thermoplastischen, Schicht, vorzugsweise aufweisend und/oder bestehend aus thermoplastischen Ether-TPU (TPU bezeichnet thermoplastisches Polyurethan), beschichtet sein kann. Die Beschichtung mit der Schicht kann vollständig oder teilflächig auf wenigstens einer Außenseite der Trägerschicht vorgesehen sein.

Insbesondere wird die Trägerschicht mit der, insbesondere thermoplastischen, Schicht vor dem Auftrag, insbesondere der Beschichtung, mit der weiteren Schicht, beschichtet.

Darüber hinaus betrifft die vorliegende Erfindung die Verwendung einer Baubahn, insbesondere einer Unterdachbahn und/oder einer Fassadenbahn, gemäß einem der vorhergehenden Ausführungsformen als feuerhemmende Einrichtung in einem Dachaufbau und/oder in einem Gebäude, vorzugsweise zur Erhöhung des Brandschutzes eines Bauwerkes, vorzugsweise eines Steildaches des Bauwerkes.

Insbesondere ist die Unterdachbahn zur Feuerhemmung eines außenseitig an dem Dach entstehenden und/oder vorhandenen Feuers vorgesehen. Demzufolge kann die erfindungsgemäße Unterdachbahn die Brandeinwirkung von außen durch ihre feuerhemmende Ausbildung verzögern, wenn nicht gar verhindern, insbesondere im Hinblick auf die Ausbreitung in das Gebäudeinnere.

Bei der erfindungsgemäßen Verwendung der Unterdachbahn zeigt sich die erfindungsgemäße Ausbildung der Unterdachbahn als besonders vorteilhaft. Zur Vermeidung von unnötigen Wiederholungen darf auf die vorstehenden Ausführungen verwiesen werden.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Es zeigt:
- Fig. 1: eine schematische Querschnittsansicht einer erfindungsgemäßen Unterdachbahn,
- Fig. 2: eine schematische Querschnittsansicht einer Ausführungsform einer Unterdachbahn, die nicht Teil der Erfindung ist,

- Fig. 3: eine schematische Querschnittsansicht einer weiteren Ausführungsform einer nicht erfindungsgemäßen Unterdachbahn,
- Fig. 4: eine schematische Querschnittsansicht einer weiteren Ausführungsform einer erfindungsgemäßen Unterdachbahn,
- Fig. 5: eine schematische Querschnittsansicht einer weiteren Ausführungsform einer erfindungsgemäßen Unterdachbahn,
- Fig. 6: eine schematische Querschnittsansicht einer weiteren Ausführungsform einer erfindungsgemäßen Unterdachbahn,
- Fig. 7: eine schematische Querschnittsansicht einer weiteren Ausführungsform einer erfindungsgemäßen Unterdachbahn,
- Fig. 8: eine schematische Querschnittsansicht einer weiteren Ausführungsform einer erfindungsgemäßen Unterdachbahn,
- Fig. 9: eine schematische Darstellung einer erfindungsgemäßen Überwachungseinrichtung,
- Fig. 10: eine schematische Querschnittsansicht einer weiteren Ausführungsform einer erfindungsgemäßen Unterdachbahn und
- Fig. 11: eine schematische Querschnittsansicht einer weiteren Ausführungsform einer erfindungsgemäßen Unterdachbahn.

Bei der Figurenbeschreibung wird auf eine Unterdachbahn 1 eingegangen. Erfindungsgemäß versteht es sich jedoch, dass die Ausführungen für die Unterdachbahn 1 in gleicher Weise auch für eine Baubahn, vorzugsweise eine Fassadenbahn, gelten können.

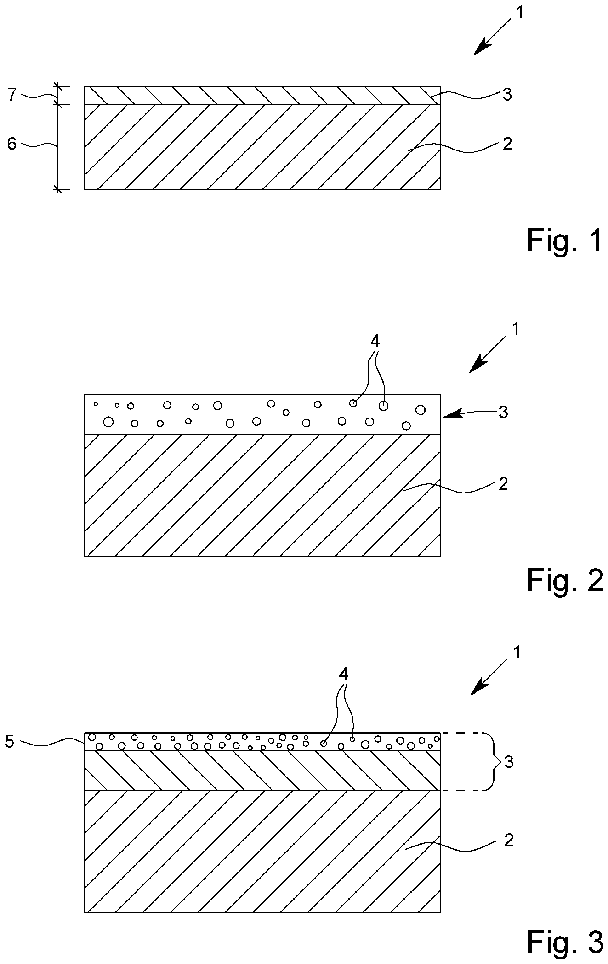

Fig. 1 zeigt eine Unterdachbahn 1 mit wenigstens einer als Brandschutzschicht ausgebildeten Trägerschicht 2 und wenigstens einer weiteren Schicht 3, wobei die weitere Schicht 3 als weitere Brandschutzschicht ausgebildet ist.

Nicht dargestellt ist, dass die Unterdachbahn 1 auch eine Mehrzahl von Trägerschichten 2 aufweisen kann.

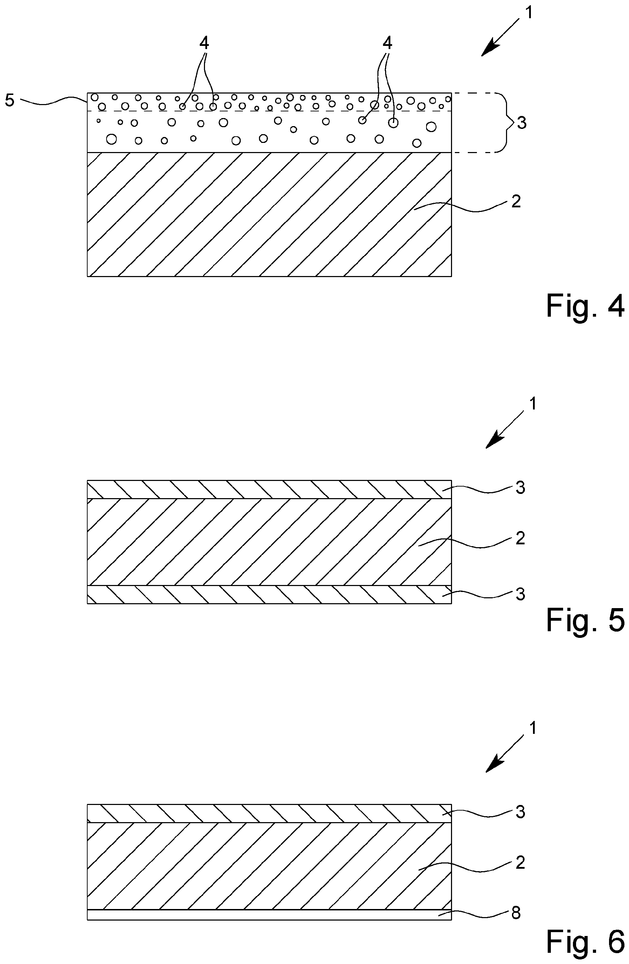

In Fig. 5 ist dargestellt, dass die Unterdachbahn 1 eine Mehrzahl - im dargestellten Ausführungsbeispiel zwei - an weiteren Schichten 3 aufweisen kann.

Bei einer Mehrzahl von weiteren Schichten 3 kann vorgesehen sein, dass die weiteren Schichten 3 baugleich oder zueinander unterschiedlich ausgebildet sind.

Im Verwendungszustand wird die Unterdachbahn 1 insbesondere derart an bzw. in der Dachkonstruktion angeordnet, dass bevorzugt die weitere Schicht 3 nach au-ßen gerichtet bzw. der Witterung zugewandt ist. Die Trägerschicht 2 kann dabei dem Gebäudeinneren zugewandt sein.

Die weitere Schicht 3 stellt insbesondere den Brandschutz sicher, wobei Brandeinwirkungen von außen verzögert werden können. Eine Ausbildung der weiteren Schicht 3 als Brandschutzschicht ist derart zu verstehen, dass die weitere Schicht 3, aber auch die Trägerschicht 2, zur Erhöhung des Brandschutzes eingesetzt wird und ferner im Brandfall zu einer Verzögerung der Brandweiterleitung bzw. der Übertragung des Feuers führen kann.

Nicht dargestellt ist, dass die Unterdachbahn 1 zur Verwendung als Unterdeckbahn, vorzugsweise Schalungsbahn, und/oder Dachabdichtungsbahn vorgesehen ist.

Bei der in Fig. 1 dargestellten Ausführungsform ist vorgesehen, dass die Unterdachbahn 1 und die weitere Schicht 3 schwer entflammbar gemäß DIN 4102-1 und gemäß EN 13501-1 ausgebildet sind. In weiteren Ausführungsformen kann vorgesehen sein, dass auch die Trägerschicht 2 schwer entflammbar und/oder nicht brennbar gemäß den vorgenannten Normen ausgebildet ist. Fig. 2 zeigt, dass die weitere Schicht 3 als nicht brennbare Schicht ausgebildet ist, wobei sie die Baustoffklasse A2 gemäß DIN 4102-1 aufweist.

Die in Fig. 2 dargestellte Unterdachbahn 1 ist feuerhemmend mit einer Feuerwiderstandsklasse von F30 gemäß DIN 4102-2 und gemäß EN 13501-2 ausgebildet.

Die in Fig. 4 dargestellte Unterdachbahn 1 ist mit der Trägerschicht 2 und der weiteren Schicht 3 hochfeuerhemmend mit einer Feuerwiderstandsklasse F60 gemäß DIN 4102-2 und gemäß EN 13501-2 ausgebildet.

Die in Fig. 3 dargestellte Unterdachbahn 1 wiederum weist einen Feuerwiderstand der Class A nach ASTM E108, insbesondere nach ASTM E108-17, auf. In weiteren Ausführungsformen kann die Trägerschicht 2 und/oder die weitere Schicht 3 feuerhemmend mit einer Feuerwiderstandsklasse von F30 oder hochfeuerhemmend mit einer Feuerwiderstandsklasse von F60 ausgebildet sein.

Die in Fig. 1 dargestellte Trägerschicht 2 ist als textiles Flächengewebe ausgebildet. In weiteren Ausführungsformen kann die Trägerschicht 2 ein textiles Flächengewebe aufweisen. Das textile Flächengewebe kann aus Glasfasergewebe, Kohlefasergewebe, Keramikfasergewebe, Siliziumfasergewebe, Polycarbonfasergewebe und/oder Metallfasergewebe aufgebaut sein. Insbesondere ist das Material der Trägerschicht 2 derart gewählt, dass die Trägerschicht 2 schwer entflammbar und/oder nicht brennbar und/oder feuerhemmend und/oder hochfeuerhemmend ausgebildet ist.

Bei der in Fig. 2 dargestellten Ausführungsform ist vorgesehen, dass die Trägerschicht 2 wenigstens ein Vlies aufweist. Das Vlies kann mineralische Fasern, Aramidfasern, thermoplastische Fasern und/oder Glas- und/oder Steinwollefasern aufweisen und/oder daraus bestehen. Als thermoplastische Fasern können insbesondere hochtemperaturthermoplastische Fasern und/oder Fasern aus thermisch behandelten Thermoplasten vorgesehen sein.

Die in Fig. 3 dargestellte Trägerschicht 2 ist als Glasfasermatte ausgebildet.

In weiteren Ausführungsformen kann die Trägerschicht 2 Glasfasern, Kohlefasern und/oder Steinwolle aufweisen und/oder als Kohlefasermatte ausgebildet sein. Zudem kann in weiteren bevorzugten Ausführungsformen vorgesehen sein, dass die Trägerschicht 2, insbesondere oxidierte, Polyacrylnitril-Fasern (PAN-Fasern) aufweist und/oder daraus besteht.

Bei der in Fig. 1 dargestellten Ausführungsform ist die weitere Schicht 3 als Beschichtung ausgebildet. Bei der in Fig. 1 dargestellten Ausführungsform ist die Beschichtung einseitig auf die Trägerschicht 2 aufgebracht.

Nicht dargestellt ist, dass die weitere Schicht 3 als Lackschicht ausgebildet ist.

Fig. 5 zeigt, dass die als Beschichtung ausgebildete weitere Schicht 3 beidseitig auf die Trägerschicht 2 aufgebracht ist.

Die als Beschichtung ausgebildete weitere Schicht 3 ist auf Basis einer, insbesondere wässrigen, Acrylatdispersion hergestellt. Dabei kann die Acrylatdispersion Acrylate, insbesondere Methacrylate, Butylacrylate, Alklylmethacrylate, Ethylacrylate und/oder Polyacrylate aufweisen und/oder daraus bestehen.

Nicht dargestellt ist, dass die weitere Schicht 3 ungeschäumt und/oder hydrophobierungsmittelzusatzfrei (frei von einer zusätzlichen Hydrophobierungsmittelschicht) ausgebildet ist.

Die in Fig. 1 dargestellte weitere Schicht 3 ist diffusionssperrend ausgebildet.

Fig. 2 zeigt, dass eine diffusionsbremsende weitere Schicht 3 vorgesehen ist.

Fig. 2 zeigt weiter, dass die weitere Schicht 3, die im dargestellten Ausbildungsbeispiel als Beschichtung ausgebildet ist, Füllstoffpartikel 4 aufweist. Insbesondere sind anorganische Füllstoffpartikel 4 vorgesehen. Als Füllstoffpartikel 4 können mineralische Füllstoffpartikel 4, wie Quarzkörner und/oder Mineralkörner, verwendet werden, dieses Ausbildungsbeispiel ist aber nicht Teil der Erfindung.

Nicht dargestellt ist, dass die Füllstoffpartikel 4 wenigstens einen Anteil von 30 Gew.-%, bevorzugt von wenigstens 40 Gew.-%, weiter bevorzugt von wenigstens 50 Gew.-%, insbesondere von wenigstens 60 Gew.-%, mit Partikeln einer mittleren Korngröße bzw. Partikelgröße zwischen 0,01 bis 5 mm aufweisen. In weiteren Ausführungsformen kann die Partikelgröße zwischen 0,05 bis 1 mm liegen. Insbesondere ist ein weiterer Anteil von weiteren Partikeln (Füllstoffpartikel 4) vorgesehen, wobei die weiteren Partikel der Füllstoffpartikel 4 eine Korngröße aufweisen, die größer ist als die mittlere Korngröße der Partikel 4.

Beispielsweise können als Füllstoffpartikel 4 Feinsand bzw. sehr feinkörniger Sand verwendet werden, dies ist aber auch nicht Teil der Erfindung.

Erfindungsgemäß ist Blähgraphit als Material für die Füllstoffpartikel 4 vorgesehen bzw. die Füllstoffpartikel 4 weisen Blähgraphit auf und/oder bestehen daraus.

Das Ausführungsbeispiel von Fig. 3, das nicht Teil der Erfindung ist, zeigt, dass die weitere Schicht 3 eine Streuschicht 5 aufweist. Im dargestellten Ausführungsbeispiel weist die Streuschicht 5 Füllstoffpartikel 4 auf. Die weitere Schicht 3 kann unmittelbar in die Streuschicht 5 übergehen. Im dargestellten Ausführungsbeispiel ist die Streuschicht 5 durch eine Besandung der weiteren Schicht 3 hergestellt worden. Als Füllstoffpartikel 4 können anorganische Füllstoffpartikel 4, insbesondere mineralische Füllstoffpartikel 4, verwendet werden. Insbesondere sind als Füllstoffpartikel 4 der Streuschicht 5 Quarzkörner und/oder Mineralkörner vorgesehen.

Nicht dargestellt ist, dass die Streuschicht 5 durch Aufstreuen der Füllstoffpartikel 4 auf die, insbesondere feuchte und/oder nicht ausgehärtete, außenseitige Oberfläche der weiteren Schicht 3 hergestellt worden ist.

Fig. 4 zeigt, dass die Füllstoffpartikel 4 in der Streuschicht 5 vorgesehen sind. Weitere Füllstoffpartikel 4 sind in der als Beschichtung ausgebildeten weiteren Schicht 3, die auf Basis einer insbesondere wässrigen Acrylatdispersion hergestellt worden ist, vorgesehen. Dabei kann die Streuschicht 4 durch Besandung der weiteren Schicht 3 hergestellt worden sein, wobei die Beschichtung der weiteren Schicht 3 bereits beim Auftrag auf die Trägerschicht 2 die Füllstoffpartikel 4 aufgewiesen haben kann. So kann vorgesehen sein, dass die Füllstoffpartikel 4 der weiteren Schicht 3 nicht nur in der Streuschicht 5, sondern auch in dem Schichtaufbau der weiteren Schicht 3 vorgesehen ist.

In den Ausführungsformen gemäß den Fig. 1 bis 6 ist vorgesehen, dass die Schichtdicke 6 der Trägerschicht 2 größer als die Schichtdicke 7 der weiteren Schicht 3 ausgebildet ist. Insbesondere kann die Schichtdicke 6 der Trägerschicht 2 um wenigstens 20 %, insbesondere zwischen 65 % bis 200 %, größer als die Schichtdicke 7 der weiteren Schicht 3 ausgebildet sein.

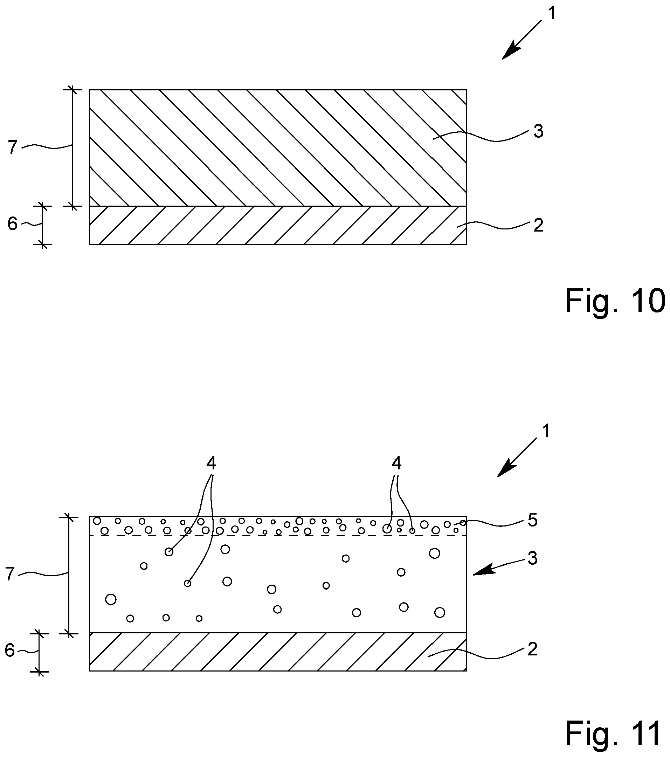

Die Fig. 10 und 11 zeigen, dass die Schichtdicke 6 der Trägerschicht 2 kleiner als die Schichtdicke 7 der weiteren Schicht 3 ausgebildet ist. Insbesondere kann die Schichtdicke 7 der weiteren Schicht 3 um wenigstens 20 %, insbesondere zwischen 65 % bis 200 %, größer als die Schichtdicke 6 der Trägerschicht 2 ausgebildet sein.

Die Fig. 10 entspricht insbesondere der in Fig. 1 gezeigten Ausführungsform, wobei dem gegenüber eine Veränderung der Schichtdicken 6, 7 vorgesehen ist. Die Fig. 11 entspricht zumindest im Wesentlichen der Ausführungsform gemäß Fig. 4, wobei ebenfalls das Verhältnis der Schichtdicken 6, 7 anders ausgestaltet ist.

Nicht dargestellt ist, dass die Trägerschicht 2 als Flächengewicht zwischen 20 bis 2000 g/m², insbesondere zwischen 40 bis 400 g/m², aufweist.

In den dargestellten Ausführungsformen ist vorgesehen, dass die weitere Schicht 3 unmittelbar mit der Trägerschicht 2 verbunden ist. Die Verbindung der Trägerschicht 2 zu der weiteren Schicht 3 kann eine Verklebung und/oder eine formschlüssige Verbindung beinhalten. Nicht dargestellt ist, dass die weitere Schicht 3 lediglich mittelbar mit der Trägerschicht 2 verbunden ist, wobei zwischen Trägerschicht 2 und weiteren Schicht 3 andere (separate) Schichten angeordnet sein können.

Bei den dargestellten Ausführungsformen ist ferner vorgesehen, dass die weitere Schicht 3 vollflächig auf der Trägerschicht 2 aufgebracht ist. Nicht dargestellt ist, dass die weitere Schicht 3 teilflächig auf die Trägerschicht 2 aufgebracht bzw. an dieser angeordnet sein kann. Die weitere Schicht 3 kann außenseitig auf die Trägerschicht 2 aufgebracht werden.

Des Weiteren ist nicht dargestellt, dass die weitere Schicht 3 als, insbesondere diffusionsdichte, Metallschicht ausgebildet ist. Die Metallschicht kann durch eine Metallisierung der Trägerschicht 2 über eine Metallbedampfung hergestellt worden sein, wobei die Metallschicht unmittelbar auf die Trägerschicht 2 aufbringbar ist.

Bei der in Fig. 3 und 4 dargestellten Ausführungsform ist vorgesehen, dass die Unterdachbahn 1 und die weitere Schicht 3 auf wenigstens einer Außenseite rutschhemmend ausgeführt sind. Die rutschhemmende Oberfläche der Unterdachbahn 1 und der weiteren Schicht 3 kann rau ausgebildet sein, wobei die unebene Oberflächenstruktur, die die Rauheit bedingt, durch die Streuschicht 5 und die Füllstoffpartikel 4 erzeugbar ist. Insbesondere bewirkt die Besandung (Streuschicht 5) der weiteren Schicht 3 eine raue Oberfläche der weiteren Schicht 3.

Bei der in Fig. 2 dargestellten Ausführungsform ist vorgesehen, dass die Unterdachbahn 1 eine geringe Brandlast mit einem Energieinhalt (Heizwert) von unter 400 MJ/m² aufweist. Insbesondere weist die Unterdachbahn 1 einen Energiegehalt von kleiner oder gleich 10,5 MJ/m² auf. Der vorgenannte geringe Heizwert ergibt sich insbesondere bei der Ausbildung der Unterdachbahn 1 als Dampfsperre und/oder Dampfbremse.

Außerdem sind die Trägerschicht 2 und die weitere Schicht 3, insbesondere die Unterdachbahn 1 bis mindestens 450 °C, insbesondere bis mindestens 800 °C, temperaturfest bzw. temperaturstabil. In den dargestellten Ausführungsformen ist die Unterdachbahn 1 bis mindestens 450 °C temperaturstabil. Bis zu dieser Temperaturgrenze ergibt sich insbesondere keine wesentliche Veränderung der Unterdachbahn 1 aufgrund der thermischen Belastung, wobei die Unterdachbahn 1 zur Flammenhemmung bereitgestellt ist.

Nicht dargestellt ist, dass die Unterdachbahn 1 trittfest, insbesondere mittels wenigstens eines anorganischen und/oder organischen Gitters und/oder Gewebes, und/oder weiterreißfest ausgebildet ist. Eine Weiterreißfestigkeit der Unterdachbahn 1 kann durch eine bevorzugt armierte, insbesondere dampf- und/oder windsperrende und/oder Metall und/oder Kunststoff aufweisende und/oder daraus bestehende, Folienschicht sichergestellt werden.

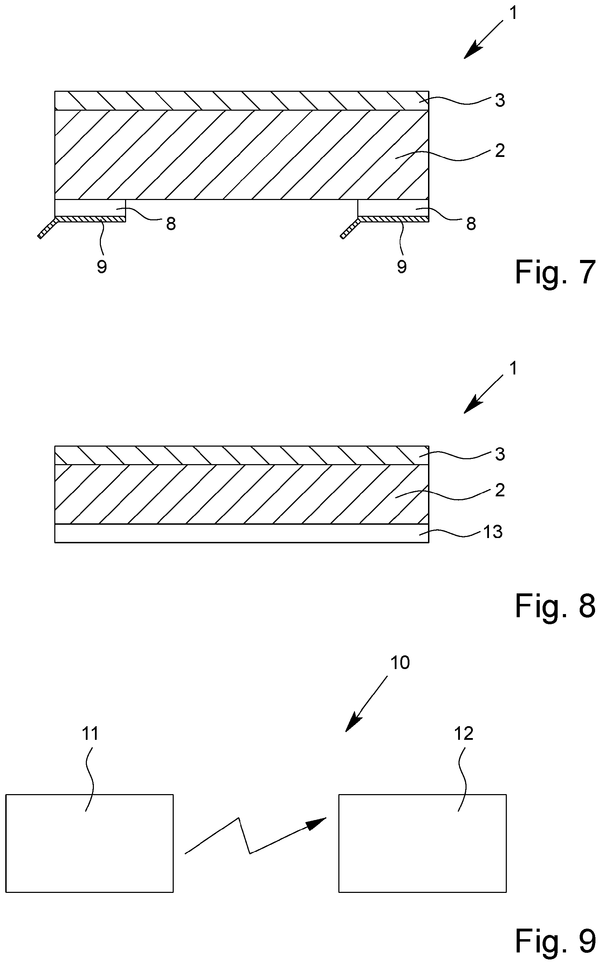

Fig. 6 zeigt, dass die Unterdachbahn 1 eine Klebeschicht 8 aufweist. Bei der in Fig. 6 dargestellten Ausführungsform ist vorgesehen, dass die Klebeschicht 8 einseitig auf der Innenseite der Unterdachbahn 1. die dem Inneren des Gebäudes zugewandt ist, aufgebracht ist. Eine beidseitige Anordnung der Klebeschicht 8 ist nicht dargestellt. Die Klebeschicht 8 ist zur Verklebung, bevorzugt Nahtselbstverklebung, benachbarter Unterdachbahnen 1 vorgesehen. In Fig. 7 ist dargestellt, dass die Klebeschicht 8 teilflächig ausgebildet ist. Bei der in Fig. 7 dargestellten Ausführungsform ist die Klebeschicht 8 streifenförmig längsrandseitig der Unterdachbahn 1 angeordnet. Ferner ist die Klebeschicht 8 mit einem Liner 9 (Abziehfolie) abgedeckt, der, insbesondere partiell, zur Verklebung entfernt werden kann.

Bei der in Fig. 6 dargestellten Ausführungsform ist vorgesehen, dass die Klebeschicht 8 zumindest im Wesentlichen vollflächig auf der Unterdachbahn 1 vorgesehen ist. Bei der in Fig. 6 dargestellten Ausführungsform kann vorgesehen sein, dass die Klebeschicht 8 zur Verklebung zunächst "aktiviert" werden muss. Eine Aktivierung der Klebeschicht 8 kann beispielsweise über Einwirkung von Wärme bzw. Hitze geschehen.

Bei der in Fig. 6 dargestellten Klebeschicht 8 ist vorgesehen, dass diese flammenhemmend bzw. feuerhemmend gemäß DIN 4102-2 und EN 13501-2 ausgerüstet ist. Insbesondere kann die Klebeschicht 8 eine Feuerwiderstandsklasse von F30 und/oder F60 (hochfeuerhemmend) aufweisen. Die Klebeschicht 8 kann demzufolge ebenfalls als weitere Brandschutzschicht der Unterdachbahn 1 ausgebildet sein.

Fig. 9 zeigt eine Überwachungseinrichtung 10. Die Überwachungseinrichtung 10 kann in die Unterdachbahn 1 integriert sein und/oder als separate Einrichtung bzw. als Einrichtung mit separaten Mitteln und in die Bahn 1 integrierten Mitteln der Unterdachbahn 1 zugeordnet sein. In der Fig. 9 ist schematisch dargestellt, dass eine Messeinrichtung 11 der Überwachungseinrichtung mit einer Alarmeinrichtung 12 verbunden ist. Insbesondere kann eine drahtlose Verbindung zum Informationsaustausch zwischen der Messeinrichtung 11 und der Alarmeinrichtung 12 vorgesehen sein.

Die Alarmeinrichtung 12 kann zur Aussendung eines Signaltons dienen. Darüber hinaus kann alternativ oder zusätzlich über die Alarmeinrichtung 12 ein Warnsignal insbesondere an Feuerwehrkräfte, Einsatzkräfte und/oder Rettungskräfte gesendet werden. Vorzugsweise erfolgt eine derartige Übertragung drahtlos.

Die Messeinrichtung 11 kann beispielsweise an der und/oder in der Unterdachbahn 1 integriert bzw. angeordnet sein. Die Messeinrichtung 11 kann als Rauchmelder und/oder Wärmemelder ausgebildet sein. Dabei dient die Messeinrichtung 11 zur Detektion eines Feuers bzw. Brandes.

Die Überwachungseinrichtung 10 dient demzufolge zur weiteren Erhöhung des Brandschutzes. Bis zum Eintreffen von Einsatzkräften kann insbesondere durch die erfindungsgemäße Ausbildung der Unterdachbahn 1 eine Weiterleitung des Brandes, der insbesondere außenseitig bzw. von außen einwirkt, unterbunden werden.

In den dargestellten Ausführungsbeispielen ist die Unterdachbahn 1 wasserabweisend, insbesondere wasserdicht ausgebildet. Vorzugsweise weist die Unterdachbahn 1 eine Wassersäule von 0,8 bis 40 m, bevorzugt zwischen 0,9 bis 30 m, auf. Insbesondere werden die wasserabweisenden und/oder wasserdichten Eigenschaften der Unterdachbahn 1 durch die weitere Schicht 3 bereitgestellt. Die Trägerschicht 2 kann - muss aber nicht - wasserdurchlässig ausgebildet sein.

Bei der in Fig. 2 dargestellten Ausführungsform ist vorgesehen, dass die weitere Schicht 3 und die Unterdachbahn 1 (im Gesamten) als Dampfbremse mit einer wasserdampfdiffusionsäquivalenten Luftschichtdicke (s_{d}-Wert) zwischen 0,5 bis 1500 m ausgebildet sind.

Die in Fig. 6, aber auch in der Fig. 1 dargestellte Unterdachbahn 1 ist als Dampfsperre mit einer wasserdampfdiffusionsäquivalenten Luftschichtdicke (s_{d}-Wert) von größer als 1500 m ausgebildet. Die wasserdampfbremsende und/oder wasserdampfsperrende Eigenschaft der Unterdachbahn 1 kann ebenfalls über die Ausbildung der weiteren Schicht 3 und/oder der Trägerschicht 2 erreicht werden.

Nicht dargestellt ist, dass die Trägerschicht 2 und/oder die weitere Schicht 3 und/oder die Unterdachbahn 1 diffusionsoffen, vorzugsweise wasserdampfdurchlässig mit einer wasserdampfdiffusionsäquivalenten Luftschichtdicke (s_{d}-Wert) zwischen 0,01 bis 1 m, insbesondere zwischen 0,03 bis 0,3 m, ausgebildet ist.

Fig. 8 zeigt, dass die Unterdachbahn 1 wenigstens eine Funktionsschicht 13 aufweist. Die Funktionsschicht 13 kann wasserdicht ausgebildet sein.

Ferner kann die Funktionsschicht 13 in weiteren Ausführungsformen wasserdampfsperrend, wasserdampfbremsend und/oder wasserdampfdurchlässig - je nach gewünschter Ausführungsform der Unterdachbahn 1 - ausgebildet sein.

Nicht dargestellt ist, dass die Funktionsschicht 13 als mikroporöse Membranschicht und/oder als eine monolithische Membranschicht ausgebildet ist. Auch ein mehrteitiger Aufbau der Funktionsschicht 13 und/oder eine Mehrzahl von Funktionsschichten 13 ist in den dargestellten Ausführungsformen nicht gezeigt.

Insbesondere kann die Funktionsschicht 13 als Material einen Kunststoff, bevorzugt auf polyolefinischer Kunststoffbasis und/oder thermoplastisches Polyurethan (TPU), aufweisen und/oder daraus bestehen.

Schließlich ist nicht dargestellt, dass die Unterdachbahn 1 gemäß einer der zuvor beschriebenen Ausführungsformen als feuerhemmende Einrichtung in einem Dachaufbau und/oder in einem Gebäude verwendet werden kann. Eine diesbezügliche Verwendung kann insbesondere zur Erhöhung des Brandschutzes eines Bauwerkes dienen. Insbesondere wird die Unterdachbahn 1 in einem Steildach des Bauwerkes eingesetzt. Die Unterdachbahn 1 kann zur Feuerhemmung eines außenseitig - Brandeinwirkung von außen - an dem Dach entstehenden und/oder vorhandenen Feuers vorgesehen sein.

Durch die flammenhemmenden Eigenschaften der Unterdachbahn 1 kann insbesondere eine Ausbreitung des Brandes im Brandfall verhindert und/oder vermieden werden.

### Ausführungsbeispiele

Nachfolgend werden drei Ausführungsbeispiele zur Herstellung einer erfindungsgemäßen Baubahn, insbesondere einer Unterdachbahn und/oder Fassadenbahn, bzw. die erfindungsgemäße Baubahn, insbesondere einer Unterdachbahn und/oder Fassadenbahn, als solches angegeben.

### 1. Ausführungsbeispiel

Auf einer Beschichtungsanlage wird eine Trägerschicht, insbesondere ein Vlies, vorzugsweise aufweisend oder bestehend aus oxidierten Polyacrylnitril-Fasern mit einer weiteren Schicht, insbesondere einer wässrigen Beschichtungsmasse der weiteren Schicht, beschichtet bzw. die Trägerschicht wird gemeinsam mit der weiteren Schicht der Beschichtungsanlage zugeführt, insbesondere wobei die weitere Schicht auf die Trägerschicht beschichtet wird.

Die Trägerschicht weist insbesondere ein Flächengewicht von 250 g/m² +/- 10 % auf.

Anschließend kann die weitere Schicht, insbesondere der Schichtenverbund aus Trägerschicht und weiterer Schicht, bevorzugt in einem Durchlauftrockenofen, zumindest im Wesentlichen vollständig getrocknet werden.

Das Beschichtungsgewicht der weiteren Schicht, insbesondere der wässrigen Masse, beträgt dabei 250 g/m² +/- 10 %.

Die weitere Schicht, insbesondere die Beschichtungsmasse, enthält eine Acrylatdispersion, 15 Gew.-% +/- 10 % Bariumsulfat, 18 Gew.-% Blähgraphit +/- 10 % und 5 Gew.-% Antimontrioxid +/- 10 % als anorganische Füllstoffe.

Die Baubahn wird dabei nicht aufgeschäumt und nicht hydrophobiert.

### 2. Ausführungsbeispiel

In einem ersten Schritt wird auf einer Beschichtungsanlage eine Trägerschicht, insbesondere ein PET-Vlies, vorzugsweise mit einem Flächengewicht von 80 g/m² +/-10 %, mit einer weiteren Schicht, insbesondere einer wässrigen Beschichtungsmasse, beschichtet bzw. die Trägerschicht wird gemeinsam mit der weiteren Schicht der Beschichtungsanlage zugeführt, insbesondere wobei die weitere Schicht auf die Trägerschicht beschichtet wird.

Anschließend kann die weitere Schicht, insbesondere der Schichtenverbund aus Trägerschicht und weiterer Schicht, bevorzugt in einem Durchlauftrockenofen, zumindest im Wesentlichen vollständig getrocknet werden.

Das Beschichtungsgewicht der weiteren Schicht, insbesondere der wässrigen Masse, beträgt dabei 200 g/m² +/- 10 %.

Die weitere Schicht, insbesondere die Beschichtungsmasse, enthält eine Acrylatdispersion, 15 Gew.-% +/- 10 % Bariumsulfat und 18 Gew.-% +/- 10 % Blähgraphit als anorganische Füllstoffe.

Die weitere Schicht, insbesondere die Beschichtungsmasse, enthält ebenfalls Schaumhilfsmittel und wird bevorzugt vor der Beschichtung mittels Luft aufgeschäumt. Nach der Beschichtung wird die weitere Schicht insbesondere hydrophobiert.

In einem zweiten Schritt wird die im ersten Schritt erhaltene Baubahn auf einer Kaschieranlage mit einer weiteren Trägerschicht, insbesondere einem Vlies, vorzugsweise aus oxidierten Polyacrylnitril-Fasern, mittels eines Klebemittels, insbesondere eines reaktiven PU-Hotmelt, verklebt bzw. stoffschlüssig verbunden.

Die weitere Trägerschicht kann ein Flächengewicht von 250 g/m² +/- 10 % aufweisen.

### 3. Ausführungsbeispiel

In einem ersten Schritt wird auf einer Extrusionsbeschichtungsanlage eine Trägerschicht, insbesondere ein PET-Vlies, mit einer thermoplastischen Schicht, insbesondere aufweisend ein thermoplastisches Ether-TPU, beschichtet.

Die Trägerschicht weist ein Flächengewicht von 80 g/m² +/- 10 % auf. Die thermoplastische Schicht weist ein Beschichtungsgewicht von 30 g/m² +/- 10 % auf.

In einem zweiten Schritt wird auf einer Beschichtungsanlage die im ersten Arbeitsgang erhaltene Bahn bzw. der Schichtenverbund mit einer weiteren Schicht, insbesondere einer wässrigen Beschichtungsmasse, eschichtet bzw. die Trägerschicht und/oder die thermoplastische Schicht wird gemeinsam mit der weiteren Schicht der Beschichtungsanlage zugeführt, insbesondere wobei die weitere Schicht auf die Trägerschicht und/oder die thermoplastische Schicht beschichtet wird

Anschließend kann die weitere Schicht, insbesondere der Schichtenverbund aus Trägerschicht, thermoplastischer Schicht und weiterer Schicht, bevorzugt in einem Durchlauftrockenofen, zumindest im Wesentlichen vollständig getrocknet werden.

Das Beschichtungsgewicht der weiteren Schicht, insbesondere der wässrigen Masse, beträgt dabei 200 g/m²+/- 10 %.

Die weitere Schicht, vorzugsweise die Beschichtungsmasse, enthält eine Acrylatdispersion, 15 Gew.-% +/- 10 % Bariumsulfat und 18 Gew.-% +/- 10 % Blähgraphit.

Die weitere Schicht, insbesondere die Beschichtungsmasse, enthält ebenfalls Schaumhilfsmittel und wird insbesondere vor der Beschichtung, bevorzugt mittels Luft, aufgeschäumt. Auf eine Hydrophobierung wird insbesondere verzichtet.

in einem dritten Schritt wird die im zweiten Schritt erhaltene Bahn auf einer Kaschieranlage mit einer weiteren Trägerschicht, insbesondere einem Vlies, bevorzugt aus oxidierten Polyacrylnitril-Fasern, mittels eines Klebemittels, insbesondere eines reaktiven PU-Hotmelt, verklebt bzw. stoffschlüssig verbunden.

Die weitere Trägerschicht kann ein Flächengewicht von 250 g/m² +/- 10 % aufweisen.

### Bezugszeichenliste:

- 1: Unterdachbahn
- 2: Trägerschicht
- 3: weitere Schicht
- 4: Füllstoffpartikel
- 5: Streuschicht
- 6: Schichtdicke von 2
- 7: Schichtdicke von 3
- 8: Klebeschicht
- 9: Liner
- 10: Überwachungseinrichtung
- 11: Messeinrichtung
- 12: Alarmeinrichtung
- 13: Funktionsschicht

## Patentansprüche

1. Baubahn, insbesondere Unterdachbahn (1), insbesondere vorgesehen zur Verwendung als Unterdeckbahn, vorzugsweise Schalungsbahn, und/oder Dachabdichtungsbahn, und/oder Fassadenbahn, mit wenigstens einer als Brandschutzschicht ausgebildeten Trägerschicht (2) und wenigstens einer weiteren Schicht (3), wobei die weitere Schicht (3) als weitere Brandschutzschicht ausgebildet ist, wobei die weitere Schicht (3) als Beschichtung ausgebildet ist, wobei die als Beschichtung ausgebildete weitere Schicht (3) auf Basis einer, insbesondere wässrigen, Acrylatdispersion hergestellt ist, wobei die weitere Schicht (3) Füllstoffpartikel (4), insbesondere anorganische Füllstoffpartikel, aufweist, wobei die Füllstoffpartikel (4) als Material Blähgraphit aufweisen und/oder daraus bestehen und wobei die Trägerschicht (2) und die weitere Schicht (3) bis mindestens 450 °C temperaturfest bzw. temperaturstabil sind.

2. Baubahn nach Anspruch 1, **dadurch gekennzeichnet, dass** die Baubahn und/oder die Trägerschicht (2) und/oder die weitere Schicht (3) schwer entflammbar und/oder nicht brennbar gemäß DIN 4102-1 (Stand August 2019) und/oder gemäß EN 13501-1 (Stand August 2019) ausgebildet ist.

3. Baubahn nach Anspruch 1 oder 2, **dadurch gekennzeichnet, dass** die Trägerschicht (2) ein textiles Flächengewebe aufweistund/oder
dass die Trägerschicht (2) wenigstens ein Vlies aufweist, wobei das Vlies mineralische Fasern, Aramidfasern, thermoplastische Fasern, bevorzugt hochtemperaturthermoplastischen Fasern und/oder Fasern aus thermisch behandelten Thermoplasten, Glas- und/oder Steinwollefasern aufweist und/oder daraus besteht.

4. Baubahn nach einem der vorhergehenden Ansprüche, **dadurch gekennzeichnet**, die Beschichtung wenigstens einseitig, bevorzugt beidseitig, auf die Trägerschicht (2) aufgebracht ist.

5. Baubahn nach einem der vorhergehenden Ansprüche, **dadurch gekennzeichnet, dass** die als Beschichtung ausgebildete weitere Schicht Acrylate, insbesondere Methacrylate, Butylacrylate, Alklylmethacrylate, Ethylacrylate und/oder Polyacrylate, aufweist und/oder daraus besteht.

6. Baubahn nach einem der vorhergehenden Ansprüche, **dadurch gekennzeichnet**, die Füllstoffpartikel (4) wenigstens einen Anteil von wenigstens 30 Gew.-%, bevorzugt wenigstens 40 Gew.-%, weiter bevorzugt wenigstens 50 Gew.-% und insbesondere von wenigstens 60 Gew.-%, mit Partikeln einer mittleren Korngröße bzw. Partikelgröße zwischen 0,01 bis 5 mm, bevorzugt zwischen 0,02 bis 3 mm, weiter bevorzugt zwischen 0,03 bis 2 mm, vorzugsweise zwischen 0,05 bis 1 mm, aufweisen.

7. Baubahn nach einem der vorhergehenden Ansprüche, **dadurch gekennzeichnet, dass** die weitere Schicht (3) eine Streuschicht (5), vorzugsweise mittels einer Besandung, aufweist, insbesondere wobei die Streuschicht (5) die Füllstoffpartikel (4) aufweist.

8. Baubahn nach einem der vorhergehenden Ansprüche, **dadurch gekennzeichnet, dass** die Baubahn und/oder die weitere Schicht (3) auf wenigstens einer Außenseite rutschhemmend ausgeführt ist, insbesondere wobei die rutschhemmende Oberfläche der Baubahn und/oder der weiteren Schicht aufgeraut bzw. rau und/oder oberflächenstrukturiert ausgebildet ist und/oder eine raue und/oder unebene Oberflächenstruktur durch die Streuschicht (5) und/oder die Füllstoffpartikel aufweist.

9. Baubahn nach einem der vorhergehenden Ansprüche, **dadurch gekennzeichnet, dass** die Baubahn eine geringe Brandlast mit einem Energieinhalt unter 400 MJ/m², bevorzugt unter 200 MJ/m², weiter bevorzugt zwischen 1 bis 100 MJ/m², weiter bevorzugt zwischen 5 bis 80 MJ/m² und insbesondere zumindest im Wesentlichen kleiner oder gleich 10,5 MJ/m², aufweist und/oder
dass die Trägerschicht (2) und/oder die weitere Schicht (3) und/oder die Baubahn bis mindestens 600 °C, weiter bevorzugt mindestens 800 °C, temperaturfest bzw. temperaturstabil ist.

10. Baubahn nach einem der vorhergehenden Ansprüche, **dadurch gekennzeichnet, dass** die Baubahn trittfest, vorzugsweise mittels wenigstens eines anorganisches und/oder organisches Gitters und/oder Gewebes, und/oder weiterreißfest, vorzugsweise mittels einer bevorzugt armierten, insbesondere dampf- und/oder windsperrenden und/oder Metall und/oder Kunststoff aufweisenden und/oder daraus bestehenden, Folienschicht, ausgebildet ist.

11. Baubahn nach einem der vorhergehenden Ansprüche, **dadurch gekennzeichnet, dass** die Baubahn wenigstens einseitig, bevorzugt beidseitig, außenseitig wenigstens eine Klebeschicht (8) zur Verklebung, bevorzugt zur Nahtselbstverklebung, benachbarter Unterdachbahnen aufweist.

12. Baubahn nach einem der vorhergehenden Ansprüche, **dadurch gekennzeichnet, dass** die Baubahn eine Überwachungseinrichtung (10) aufweist und/oder der Baubahn eine Überwachungseinrichtung (10) zugeordnet ist.

13. Baubahn nach einem der vorhergehenden Ansprüche, **dadurch gekennzeichnet, dass** die Trägerschicht (2) und/oder die weitere Schicht (3) und/oder die Baubahn wasserabweisend und/oder wasserdicht ausgebildet ist, vorzugsweise mit einer Wassersäule von 0,5 bis 50 m, bevorzugt zwischen 0,8 bis 40 m, weiter bevorzugt zwischen 0,9 bis 30 m, und/oder
dass die Trägerschicht (2) und/oder die weitere Schicht (3) und/oder die Baubahn diffusionsoffen, vorzugsweise wasserdampfdurchlässig mit einer wasserdampfdiffusionsäquivalenten Luftschichtdicke (s_{d}-Wert) zwischen 0,01 bis 1 m, bevorzugt zwischen 0,02 bis 0,5 m, weiter bevorzugt zwischen 0,03 bis 0,3 m und insbesondere zumindest im Wesentlichen kleiner oder gleich 5 cm ausgebildet ist.

14. Baubahn nach einem der vorhergehenden Ansprüche, **dadurch gekennzeichnet, dass** die Baubahn wenigstens eine, vorzugsweise wasserdichte, Funktionsschicht (13) aufweist, insbesondere wobei die Funktionsschicht (13) als eine mikroporöse Membranschicht und/oder eine monolithische Membranschicht ausgebildet ist und/oder wobei die Funktionsschicht (13) als Material einen Kunststoff, bevorzugt auf polyolefinischer Kunststoffbasis und/oder thermoplastisches Polyurethan, und/oder ein Polyacrylat, aufweist und/oder daraus besteht.

15. Verwendung einer Baubahn gemäß einem der vorhergehenden Ansprüche als feuerhemmende Einrichtung in einem Dachaufbau und/oder in einem Gebäude, vorzugsweise zur Erhöhung des Brandschutzes eines Bauwerkes, vorzugsweise eines Steildaches des Bauwerkes, insbesondere wobei die Baubahn zur Feuerhemmung eines außenseitig an dem Dach entstehenden und/oder vorhandenen Feuers vorgesehen ist.

## Claims

1. Construction sheet, in particular sub-roof sheet (1), in particular intended for use as an underlay sheet, preferably formwork sheet, and/or roof seal sheet, and/or facade sheet, having at least one carrier layer (2) designed as a fire protection layer and at least one further layer (3), wherein the further layer (3) is designed as a further fire protection layer, the further layer (3) being designed as a coating, wherein the further layer (3) formed as a coating is manufactured on the basis of an, in particular aqueous, acrylate dispersion, wherein the further layer (3) comprises filler particles (4), in particular inorganic filler particles, wherein the filler particles (4) comprise and/or consist of exfoliated graphite as material and wherein the carrier layer (2) and the further layer (3) are temperature-resistant and/or temperature-stable up to at least 450°C.

2. Construction sheet according to claim 1, **characterized in that** the construction sheet and/or the carrier layer (2) and/or the further layer (3) is designed to be flame-retardant and/or non-combustible according to DIN 4102-1 (as of August 2019) and/or according to EN 13501-1 (as of August 2019).

3. Construction sheet according to claim 1 or 2, **characterized in that** the carrier layer (2) comprises a textile sheet fabric and/or
that the carrier layer (2) comprises at least one nonwoven, wherein the nonwoven comprises and/or consists of mineral fibers, aramid fibers, thermoplastic fibers, preferably high-temperature thermoplastic fibers and/or fibers made of thermally treated thermoplastics, glass fibers and/or rock wool fibers.

4. Construction sheet according to one of the preceding claims, **characterized in that** the coating is applied to the carrier layer (2) at least on one side, preferably both sides.

5. Construction sheet according to one of the preceding claims, **characterized in that** the further layer formed as a coating comprises and/or consists of acrylates, in particular methacrylates, butyl acrylates, alklyl methacrylates, ethyl acrylates and/or polyacrylates.

6. Construction sheet according to one of the preceding claims, **characterized in that** the filler particles (4) have at least a proportion of at least 30% by weight, preferably at least 40% by weight, more preferably at least 50% by weight and in particular at least 60% by weight, with particles having an average particle size and/or particle size of between 0.01 and 5 mm, preferably between 0.02 and 3 mm, more preferably between 0.03 and 2 mm, preferably between 0.05 and 1 mm.

7. Construction sheet according to one of the preceding claims, **characterized in that** the further layer (3) comprises a scattering layer (5), preferably by means of a sanding, in particular wherein the scattering layer (5) comprises the filler particles (4).

8. Construction sheet according to one of the preceding claims, **characterized in that** the construction sheet and/or the further layer (3) is designed to be slip-resistant on at least one outer side, in particular wherein the slip-resistant surface of the construction sheet and/or the further layer is designed to be roughened and/or rough and/or surface-structured and/or comprises a rough and/or uneven surface structure due to the scattering layer (5) and/or the filler particles.

9. Construction sheet according to one of the preceding claims, **characterized in that** the construction sheet has a low fire load with an energy content below 400 MJ/m², preferably below 200 MJ/m², more preferably between 1 and 100 MJ/m², more preferably between 5 and 80 MJ/m² and in particular at least substantially less than or equal to 10.5 MJ/m², and/or
that the carrier layer (2) and/or the further layer (3) and/or the construction sheet is temperature-resistant and/or temperature-stable up to at least 600 °C, further preferably at least 800 °C.

10. Construction sheet according to one of the preceding claims, **characterized in that** the construction sheet is designed to be resistant against treading, preferably by means of at least one inorganic and/or organic lattice and/or fabric, and/or tear-resistant, preferably by means of a preferably reinforced film layer which is in particular vapor- and/or wind-blocking and/or comprises metal and/or plastic and/or consists thereof.

11. Construction sheet according to one of the preceding claims, **characterized in that** the construction sheet comprises at least on one side, preferably on both sides, on the outside at least one adhesive layer (8) for adhesive bonding, preferably for seam self-adhesion, of neighboring sub-roof sheets.

12. Construction sheet according to one of the preceding claims, **characterized in that** the construction sheet comprises a monitoring device (10) and/or a monitoring device (10) is associated to the construction sheet.

13. Construction sheet according to one of the preceding claims, **characterized in that** the carrier layer (2) and/or the further layer (3) and/or the construction sheet is designed to be water-repellent and/or waterproof, preferably with a water column of 0.5 to 50 m, preferably between 0.8 to 40 m, more preferably between 0.9 to 30 m, and/or
that the carrier layer (2) and/or the further layer (3) and/or the construction sheet is designed to be open to diffusion, preferably permeable to water vapor with a water vapor diffusion-equivalent air layer thickness (s_{d} value) of between 0.01 and 1 m, preferably between 0.02 and 0.5 m, more preferably between 0.03 and 0.3 m and in particular at least substantially less than or equal to 5 cm.

14. Construction sheet according to one of the preceding claims, **characterized in that** the construction sheet has at least one, preferably waterproof, functional layer (13), in particular wherein the functional layer (13) is designed as a microporous membrane layer and/or a monolithic membrane layer and/or wherein the functional layer (13) comprises as material a plastic, preferably based on polyolefinic plastic and/or thermoplastic polyurethane, and/or a polyacrylate, and/or consists thereof.

15. Use of a construction sheet according to one of the preceding claims as a fire-retardant device in a roof structure and/or in a building, preferably for increasing the fire protection of a structure, preferably a pitched roof of the structure, in particular wherein the construction sheet is provided for fire-retarding a fire originating and/or available on the outside of the roof.

## Revendications

1. Bande de construction, en particulier bande de sous-toiture (1), prévue en particulier pour l'utilisation comme couvertures en pente, de préférence bande de coffrage, et/ou bande d'étanchéité de toit, et/ou bande de façade, avec au moins une couche de support (2) réalisée comme couche de protection contre le feu et au moins une autre couche (3), l'autre couche (3) étant réalisée comme autre couche de protection contre le feu, l'autre couche (3) étant réalisée comme revêtement, dans laquelle l'autre couche (3) réalisée sous forme de revêtement est fabriquée à base d'une dispersion d'acrylate, en particulier aqueuse, dans laquelle l'autre couche (3) présente des particules de charge (4), en particulier des particules de charge inorganiques, dans laquelle les particules de charge (4) présentent comme matériau du graphite expansé et/ou en sont constituées et dans laquelle la couche de support (2) et l'autre couche (3) sont résistantes à la température et/ou stables à la température jusqu'à au moins 450°C.

2. Bande de construction selon la revendication 1, **caractérisée en ce que** la bande de construction et/ou la couche de support (2) et/ou l'autre couche (3) est réalisée de manière difficilement inflammable et/ou non inflammable selon la norme DIN 4102-1 (état août 2019) et/ou selon la norme EN 13501-1 (état août 2019).

3. Bande de construction selon la revendication 1 ou 2, **caractérisée en ce que** la couche de support (2) présente un tissu plat textile et/ou
**en ce que** la couche de support (2) présente au moins un non-tissé, le non-tissé présentant et/ou étant constitué de fibres minérales, de fibres d'aramide, de fibres thermoplastiques, de préférence de fibres thermoplastiques à haute température et/ou de fibres de thermoplastiques traités thermiquement, de fibres de verre et/ou de laine de roche.

4. Bande de construction selon l'une des revendications précédentes, **caractérisée en ce que** le revêtement est appliqué au moins d'un côté, de préférence des deux côtés, sur la couche de support (2).

5. Bande de construction selon l'une des revendications précédentes, **caractérisée en ce que** l'autre couche réalisée sous forme de revêtement présente des acrylates, en particulier des méthacrylates, des acrylates de butyle, des méthacrylates d'alkyle, des acrylates d'éthyle et/ou des polyacrylates, et/ou en est constituée.

6. Bande de construction selon l'une des revendications précédentes, **caractérisée en ce que** les particules de charge (4) présentent au moins une proportion d'au moins 30 % en poids, de préférence d'au moins 40 % en poids, plus préférentiellement d'au moins 50 % en poids et en particulier d'au moins 60 % en poids, avec des particules d'une granulométrie et/ou d'une taille moyenne comprise entre 0,01 et 5 mm, de préférence entre 0,02 et 3 mm, plus préférentiellement entre 0,03 et 2 mm, de préférence entre 0,05 et 1 mm.

7. Bande de construction selon l'une des revendications précédentes, **caractérisée en ce que** l'autre couche (3) présente une couche de saupoudrage (5), de préférence au moyen d'un sablage, en particulier dans laquelle la couche de saupoudrage (5) présente les particules de charge (4).

8. Bande de construction selon l'une des revendications précédentes, **caractérisée en ce que** la bande de construction et/ou l'autre couche (3) est réalisée de manière antidérapante sur au moins un côté extérieur, en particulier la surface antidérapante de la bande de construction et/ou de l'autre couche étant réalisée de manière rugueuse et/ou structurée en surface et/ou présentant une structure de surface rugueuse et/ou inégale par la couche de saupoudrage (5) et/ou les particules de charge.

9. Bande de construction selon l'une des revendications précédentes, **caractérisée en ce que** la bande de construction présente une faible charge d'incendie avec un contenu énergétique inférieur à 400 MJ/m², de préférence inférieur à 200 MJ/m², plus préférentiellement compris entre 1 et 100 MJ/m², plus préférentiellement compris entre 5 et 80 MJ/m² et en particulier au moins sensiblement inférieur ou égal à 10,5 MJ/m², et/ou
**en ce que** la couche de support (2) et/ou l'autre couche (3) et/ou la bande de construction est résistante à la température et/ou stable à la température jusqu'à au moins 600 °C, de préférence encore au moins 800 °C.

10. Bande de construction selon l'une des revendications précédentes, **caractérisée en ce que** la bande de construction est résistante au piétinement, de préférence au moyen d'au moins une grille et/ou un tissu inorganique et/ou organique, et/ou est résistante à la déchirure, de préférence au moyen d'une couche de film armée, en particulier bloquant la vapeur et/ou le vent et/ou présentant du métal et/ou de la matière plastique et/ou constituée de ceux-ci.

11. Bande de construction selon l'une des revendications précédentes, **caractérisée en ce que** la bande de construction présente au moins d'un côté, de préférence des deux côtés, du côté extérieur, au moins une couche adhésive (8) pour le collage, de préférence pour l'autocollage des joints, de bandes de sous-toiture voisines.

12. Bande de construction selon l'une des revendications précédentes, **caractérisée en ce que** la bande de construction présente un dispositif de surveillance (10) et/ou **en ce qu'**un dispositif de surveillance (10) est associé à la bande de construction.

13. Bande de construction selon l'une des revendications précédentes, **caractérisée en ce que** la couche de support (2) et/ou l'autre couche (3) et/ou la bande de construction est réalisée de manière hydrofuge et/ou étanche à l'eau, de préférence avec une colonne d'eau de 0,5 à 50 m, de préférence entre 0,8 et 40 m, plus préférablement entre 0,9 et 30 m, et/ou
**en ce que** la couche de support (2) et/ou l'autre couche (3) et/ou la bande de construction sont ouvertes à la diffusion, de préférence perméables à la vapeur d'eau avec une épaisseur de couche d'air équivalente à la diffusion de vapeur d'eau (valeur s_{d}) comprise entre 0,01 et 1 m, de préférence entre 0,02 et 0,5 m, plus préférablement entre 0,03 et 0,3 m et en particulier au moins essentiellement inférieure ou égale à 5 cm.

14. Bande de construction selon l'une des revendications précédentes, **caractérisée en ce que** la bande de construction présente au moins une couche fonctionnelle (13), de préférence étanche à l'eau, en particulier dans laquelle la couche fonctionnelle (13) est conçue comme une couche de membrane microporeuse et/ou une couche de membrane monolithique et/ou dans laquelle la couche fonctionnelle (13) présente comme matériau une matière plastique, de préférence à base de matière plastique polyoléfinique et/ou de polyuréthane thermoplastique, et/ou un polyacrylate, et/ou en est constituée.

15. Utilisation d'une bande de construction selon l'une des revendications précédentes comme dispositif coupe-feu dans une structure de toit et/ou dans un bâtiment, de préférence pour augmenter la protection contre l'incendie d'un ouvrage, de préférence d'un toit en pente de l'ouvrage, en particulier dans laquelle la bande de construction est prévue pour arrêter le feu d'un feu se produisant et/ou existant sur le côté extérieur du toit.
